# EUROPEAN PATENT APPLICATION

(11) **EP 2 827 420 A1**
(43) Date of publication of application: **21.01.2015**
(21) Application number: 13760467.4
(22) Date of filing: 12.03.2013
(51) Int. Cl.: H01M 8/04, H01M 8/10

(54) **FUEL CELL SYSTEM**

(30) Priority: 12.03.2012 JP 2012054733; 18.09.2012 JP 2012204177
(71) Applicant: Nissan Motor Co., Ltd, Yokohama-shi, Kanagawa 221-0023 (JP)
(72) Inventor: CHIKUGO, Hayato, Atsugi-shi Kanagawa 243-0123 (JP); ICHIKAWA, Yasushi, Atsugi-shi Kanagawa 243-0123 (JP); NISHIMURA, Hidetaka, Atsugi-shi Kanagawa 243-0123 (JP)
(74) Representative: Grünecker, Kinkeldey, Stockmair & Schwanhäusser
(86) International application number: PCT/JP2013/056857
(87) International publication number: WO 2013/137271

(57) **Abstract**

Provided is a fuel cell system for supplying a fuel cell with an anode gas and a cathode gas, thereby generating electric power. The fuel cell system includes: a control valve for controlling a pressure of the anode gas in the fuel cell; a buffer part for accumulating an anode off-gas discharged from the fuel cell; an off-gas discharge passage for connecting the fuel cell and the buffer part with each other; a purge passage connected to the off-gas discharge passage; a purge valve provided on the purge passage; purge unit configured to open the purge valve to discharge the gas in the buffer part to an outside of the fuel cell system; and pressure control unit configured to decrease the pressure of the anode gas in the fuel cell from a first predetermined pressure to a second predetermined pressure, thereby controlling the gas in the buffer part to flow backward to the fuel cell side.

## Description

### TECHNICAL FIELD

This invention relates to a fuel cell system.

### BACKGROUND ART

In JP 2007-517369 A, there is disclosed a related-art fuel cell system including a normally-closed solenoid valve provided on an anode gas supply passage, and a normally-open solenoid valve and a buffer tank (recycle tank) provided on an anode gas discharge passage in this order from an upstream side. The related-art fuel cell system is a fuel cell system of an anode gas non-circulation type, which does not return an unused anode gas discharged to the anode gas discharge passage to the anode gas supply passage, and carries out a pulsation operation of periodically opening/closing the normally-closed solenoid valve and the normally-open solenoid valve to control the unused anode gas accumulated in the buffer tank to flow backward to a fuel cell stack for reuse. Then, the fuel cell system discharges impurities such as nitrogen accumulated in the buffer tank to the outside of the system via a second normally-open solenoid valve provided on the anode gas discharge passage downstream of the buffer tank.

### SUMMARY OF INVENTION

When the pulsation operation is carried out, at the time of activating the fuel cell system and during subsequent normal operation thereof, the impurities such as nitrogen accumulated in the buffer tank need to be quickly discharged from the buffer tank to the outside of the system.

Currently, there has been devised a system in which a passage (purge passage) for discharging the gas in the buffer tank to the outside of the system is connected between the fuel cell stack and the buffer tank. It is found out that when a pressure in an anode system is not appropriately controlled in this system, the gas in the buffer tank cannot be discharged from the purge passage to the outside of the system, but an anode gas having a relatively high concentration discharged from the fuel cell stack is discharged from the purge passage to the outside of the system. Therefore, it is found out that there is a problem in that the impurities such as nitrogen accumulated in the buffer tank cannot be quickly discharged to the outside of the system, and the anode gas concentration (hydrogen concentration) in the buffer tank cannot be quickly increased.

This invention has been made in view of the above-mentioned problem, and therefore has an object to quickly discharge the impurities such as nitrogen accumulated in the buffer tank to the outside of the system, thereby quickly increasing the anode gas concentration (hydrogen concentration) in the buffer tank.

### SOLUTION TO PROBLEM

According to one aspect of this invention, there is provided a fuel cell system for supplying a fuel cell with an anode gas and a cathode gas, thereby generating electric power. Then, the fuel cell system includes: a control valve for controlling a pressure of the anode gas in the fuel cell; a buffer part for accumulating an anode off-gas discharged from the fuel cell; an off-gas discharge passage for connecting the fuel cell and the buffer part with each other; a purge passage connected to the off-gas discharge passage; a purge valve provided on the purge passage; purge unit configured to open the purge valve to discharge the gas in the buffer part to an outside of the fuel cell system; and pressure control unit configured to decrease the pressure of the anode gas in the fuel cell from a first predetermined pressure to a second predetermined pressure, thereby controlling the gas in the buffer part to flow backward to the fuel cell side.

A detailed description is given below of embodiments of this invention and advantages of this invention referring to the accompanying drawings.

### BRIEF DESCRIPTION OF DRAWINGS

FIG. 1A is a schematic perspective view of a fuel cell according to a first embodiment of this invention.
FIG. 1B is a cross sectional view of the fuel cell of FIG. 1A taken along the line IB-IB.
FIG. 2 is a schematic configuration diagram of a fuel cell system of an anode gas non-circulation type according to the first embodiment of this invention.
FIG. 3 is a graph showing a pulsation operation during a steady operation where an operation state of the fuel cell system is constant.
FIG. 4 is a flowchart illustrating control of the fuel cell system according to the first embodiment of this invention.
FIG. 5 is a flowchart illustrating activation purge operation processing.
FIG. 6 is a flowchart illustrating activation purge preparation processing.
FIG. 7 is a flowchart illustrating activation purge processing.
FIG. 8 is a map for calculating an activation purge finish time *ttp* based on a representative temperature and the atmospheric pressure.
FIG. 9 is a flowchart illustrating pressure reduction processing.
FIG. 10 is a flowchart illustrating pressure maintenance processing.
FIG. 11 is a flowchart illustrating pressure increase processing.
FIG. 12 is a flowchart illustrating activation purge finish processing.
FIG. 13 is a time chart showing a control operation of the fuel cell system according to the first embodiment of this invention.
FIG. 14 is a schematic configuration diagram of a fuel cell system of an anode gas non-circulation type according to a second embodiment of this invention.
FIG. 15 is a graph showing a pulsation operation during the steady operation.
FIG. 16 is a flowchart illustrating pulsation control according to the second embodiment of this invention.
FIG. 17 is a table for setting an upper limit pressure and a lower limit pressure of an anode pressure based on target output power.
FIG. 18 is a flowchart illustrating purge control according to the second embodiment of this invention.
FIG. 19 is a flowchart illustrating purge period calculation processing according to the second embodiment of this invention.
FIG. 20 is a map for calculating a nitrogen transmission amount based on a temperature and a moisture content of an electrolyte membrane.
FIG. 21 is a table for calculating a target purge total flow rate based on a nitrogen concentration.
FIG. 22 is a map for calculating a purge period based on the anode pressure and the target purge total flow rate.
FIG. 23 is a time chart showing an operation of the purge control according to the second embodiment of this invention.

### DESCRIPTION OF EMBODIMENTS

### (First Embodiment)

A fuel cell generates electric power by sandwiching an electrolyte membrane between an anode electrode (fuel electrode) and a cathode electrode (oxidizing agent electrode), supplying the anode electrode with an anode gas (fuel gas) containing hydrogen, and supplying the cathode electrode with a cathode gas (oxidizing agent gas) containing oxygen. Electrode reactions progressing on both the anode electrode and the cathode electrode are as follows.

Anode electrode: 2H₂→4H⁺+4e (1)

Cathode electrode: 4H⁺+4e⁻+O₂→2H₂O (2)

As a result of the electrode reactions represented as (1) and (2), the fuel cell generates an electromotive force of approximately one volt.

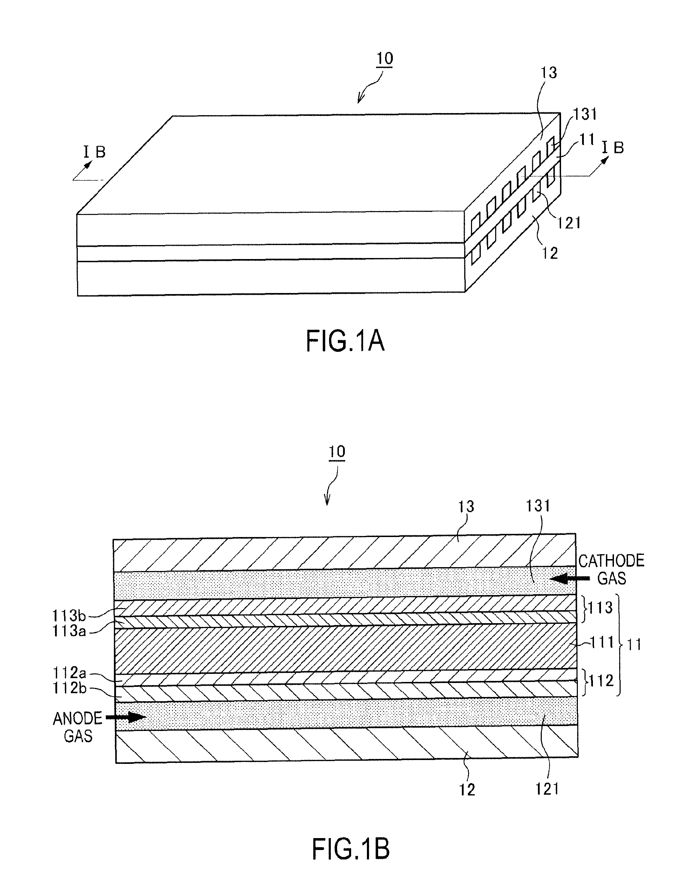

FIG. 1A and FIG. 1B are diagrams illustrating a configuration of a fuel cell 10 according to a first embodiment of this invention. FIG. 1A is a schematic perspective view of the fuel cell 10. FIG. 1B is a cross sectional view of the fuel cell 10 of FIG. 1A taken along the line IB-IB.

The fuel cell 10 is configured by arranging an anode separator 12 and a cathode separator 13 on both front and rear surfaces of a membrane electrode assembly (hereinafter referred to as "MEA") 11.

The MEA 11 includes an electrolyte membrane 111, an anode electrode 112, and a cathode electrode 113. The MEA 11 includes the anode electrode 112 on one surface of the electrolyte membrane 111, and the cathode electrode 113 on the other surface thereof.

The electrolyte membrane 111 is a proton conductive ion-exchange membrane formed by a fluorine-based resin. The electrolyte membrane 111 presents an excellent electric conductivity in a wet state.

The anode electrode 112 includes a catalyst layer 112a and a gas diffusion layer 112b. The catalyst layer 112a is in contact with the electrolyte membrane 111. The catalyst layer 112a is formed by platinum or carbon black particles carrying platinum and the like. The gas diffusion layer 112b is provided on an outside (an opposite side of the electrolyte membrane 111) of the catalyst layer 112a, and is in contact with the anode separator 12. The gas diffusion layer 112b is formed by a member having sufficient gas diffusion property and electric conductivity, and is formed by, for example, a carbon cloth woven by yarns formed by carbon fibers.

The cathode electrode 113 includes a catalyst layer 113a and a gas diffusion layer 113b similarly to the anode electrode 112.

The anode separator 12 is in contact with the gas diffusion layer 112b. The anode separator 12 includes a plurality of groove-shaped anode gas flow passages 121 on the side in contact with the gas diffusion layer 112b for supplying the anode electrode 112 with the anode gas.

The cathode separator 13 is in contact with the gas diffusion layer 113b. The cathode separator 13 includes a plurality of groove-shaped cathode gas flow passages 131 on the side in contact with the gas diffusion layer 113b for supplying the cathode electrode 113 with the cathode gas.

The anode gas flowing through the anode gas flow passages 121 and the cathode gas flowing through the cathode gas flow passages 131 flow in parallel with each other and in directions opposite to each other. The anode gas and the cathode gas may flow in parallel with each other and in the same direction.

When the fuel cell 10 is used as a power source for a vehicle, required electric power is large, and hence the fuel cells 10 are used as a fuel cell stack constructed by stacking some hundreds of fuel cells. Then, a fuel cell system for supplying the fuel cell stack with the anode gas and the cathode gas is constructed to extract the electric power for driving the vehicle.

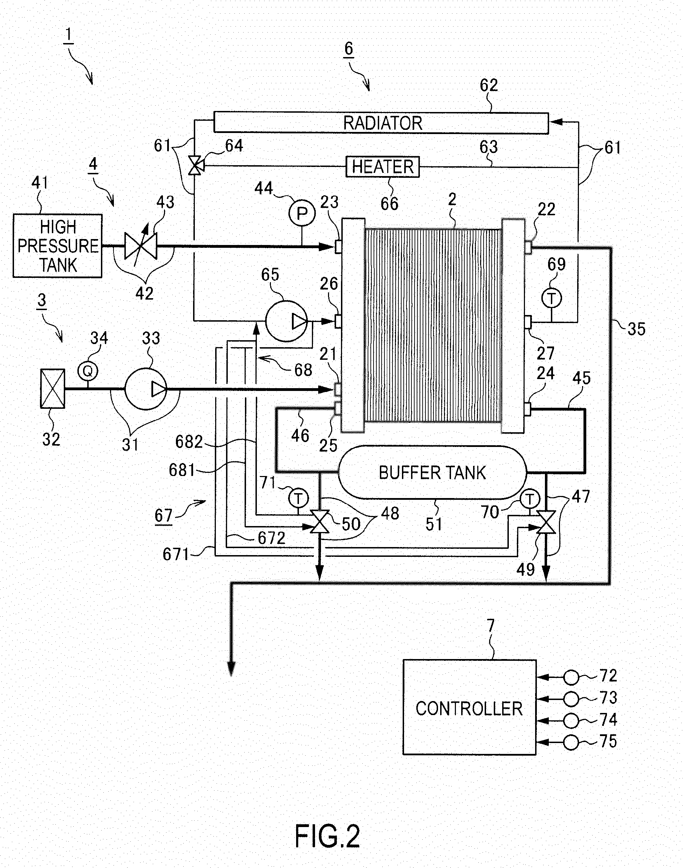

FIG. 2 is a schematic configuration diagram of a fuel cell system 1 of an anode gas non-circulation type according to the first embodiment of this invention.

The fuel cell system 1 includes a fuel cell stack 2, a cathode gas supply/discharge apparatus 3, an anode gas supply/discharge apparatus 4, a stack cooling apparatus 6, and a controller 7.

The fuel cell stack 2 is constructed by stacking a plurality of the fuel cells 10, and receives the supply of the anode gas and the cathode gas to generate the electric power required to drive the vehicle (for example, electric power required to drive a motor).

The cathode gas supply/discharge apparatus 3 includes a cathode gas supply passage 31, a filter 32, a cathode compressor 33, an airflow sensor 34, and a cathode gas discharge passage 35.

The cathode gas supply passage 31 is a passage through which the cathode gas to be supplied to the fuel cell stack 2 flows. The cathode gas supply passage 31 is connected to the filter 32 at one end and to a cathode gas inlet port 21 of the fuel cell stack 2 at the other end.

The filter 32 removes foreign substances in the cathode gas to be taken into the cathode gas supply passage 31.

The cathode compressor 33 is provided in the cathode gas supply passage 31. The cathode compressor 33 takes the air (outside air) as the cathode gas via the filter 32 into the cathode gas supply passage 31, and supplies the fuel cell stack 2 with the air.

The airflow sensor 34 is provided in the cathode gas supply passage 31 upstream of the cathode compressor 33. The airflow sensor 34 detects a flow rate of the cathode gas (hereinafter referred to as "cathode flow rate") flowing through the cathode gas supply passage 31.

The cathode gas discharge passage 35 is a passage through which the cathode off-gas discharged from the fuel cell stack 2 flows. The cathode gas discharge passage 35 is connected, at one end, to a cathode gas outlet port 22 of the fuel cell stack 2, and forms an opening end at the other end.

The anode gas supply/discharge apparatus 4 includes a high-pressure tank 41, an anode gas supply passage 42, a pressure regulating valve 43, a pressure sensor 44, a first anode gas discharge passage 45, a second anode gas discharge passage 46, a first purge passage 47, a second purge passage 48, a first purge valve 49, a second purge valve 50, and a buffer tank 51.

The high pressure tank 41 stores the anode gas to be supplied to the fuel cell stack 2 while the anode gas is maintained in a high pressure state.

The anode gas supply passage 42 is a passage for supplying the fuel cell stack 2 with the anode gas discharged from the high pressure tank 41. The anode gas supply passage 42 is connected to the high pressure tank 41 at one end and to an anode gas inlet port 23 of the fuel cell stack 2 at the other end.

The pressure regulating valve 43 is provided in the anode gas supply passage 42. The pressure regulating valve 43 adjusts the anode gas discharged from the high pressure tank 41 to have a desired pressure, and then supplies the fuel cell stack 2 with the anode gas. The pressure regulating valve 43 is an electromagnetic valve capable of adjusting an opening degree continuously or stepwise, and the opening degree thereof is controlled by the controller 7.

The pressure sensor 44 is provided in the anode gas supply passage 42 downstream of the pressure regulating valve 43. The pressure sensor 44 detects a pressure in the anode gas supply passage 42 downstream of the pressure regulating valve 43. In this embodiment, the pressure detected by the pressure sensor 44 is substituted for a pressure (hereinafter referred to as "anode pressure") of the entire anode system including the respective anode gas flow passages 121 inside the fuel cell stack and the buffer tank 51.

The first anode gas discharge passage 45 is connected to a first anode gas outlet port 24 of the fuel cell stack 2 at one end and to the buffer tank 51 at the other end. A mixed gas (hereinafter referred to as "anode off-gas") of a surplus anode gas which has not been used for the electrode reaction and inert gases such as nitrogen and water vapor which have been transmitted from the cathode side to the anode gas flow passages 121 is discharged to the first anode gas discharge passage 45.

The second anode gas discharge passage 46 is connected to a second anode gas outlet port 25 of the fuel cell stack 2 at one end and to the buffer tank 51 at the other end. The anode off-gas is discharged to the second anode gas discharge passage 46.

The first purge passage 47 is connected to the first anode gas discharge passage 45 at one end and to the cathode gas discharge passage 35 at the other end.

The second purge passage 48 is connected to the second anode gas discharge passage 46 at one end and to the cathode gas discharge passage 35 at the other end.

The first purge valve 49 is provided in the first purge passage 47. The first purge valve 49 is an electromagnetic valve capable of adjusting an opening degree to a fully open state or a fully closed state, and is controlled by the controller 7. A water jacket (not shown) is formed inside the first purge valve 49 so as to circulate a coolant for cooling the fuel cell stack 2. This configuration prevents stick caused by freezing.

The second purge valve 50 is provided in the second purge passage 48. The second purge valve 50 is an electromagnetic valve capable of adjusting an opening degree to a fully open state or a fully closed state, and is controlled by the controller 7. A water jacket (not shown) is formed inside the second purge valve 50 so as to circulate a coolant for cooling the fuel cell stack 2. This configuration prevents stick caused by freezing.

An amount of the anode off-gas discharged from the buffer tank 51 via the purge passage 37 to the outside air is adjusted by opening/closing the first purge valve 49 and the second purge valve 50, thereby adjusting an anode gas concentration inside the buffer tank 51 to a desired concentration. When the anode gas concentration (hydrogen concentration) inside the buffer tank 51 is too low, the anode gas used for the electrode reaction during a pulsation operation described later becomes insufficient. As a result, power generation efficiency decreases, and the fuel cell can deteriorate. On the other hand, when the anode gas concentration (hydrogen concentration) inside the buffer tank 51 is too high, the amount of the anode gas discharged via the purge passage 47 to the outside air along with the inert gases in the anode off-gas increases, resulting in an increase in fuel consumption. Thus, the anode gas concentration in the buffer tank 51 is controlled to an appropriate value by taking the power generation efficiency and the fuel consumption into consideration.

The buffer tank 51 temporarily stores the anode off-gas which has flown through the first anode gas discharge passage 45 and the second anode gas discharge passage 46. The anode off-gas accumulated in the buffer tank 51 is discharged via the first purge passage 47 and the second purge passage 48 to the cathode gas discharge passage 35 when the first purge valve 49 and the second purge valve 50 are opened. As a result, the mixed gas of the anode off-gas and the cathode off-gas (hereinafter referred to as "outside-air discharged gas") is discharged from an open end of the cathode gas discharge passage 35 to the outside air. The anode gas concentration in the outside-air discharged gas is decreased to be less than a predetermined flammable concentration by mixing the anode off-gas with the cathode off-gas and then discharging the mixed gas to the outside air in this way.

The stack cooling apparatus 6 is an apparatus for cooling the fuel cell stack 2, and maintaining the fuel cell stack 2 to a temperature appropriate for the power generation. The stack cooling apparatus 6 includes a coolant circulation passage 61, a radiator 62, a bypass flow passage 63, a three-way valve 64, a circulation pump 65, a PTC heater 66, a first purge valve circulation passage 67, a second purge valve circulation passage 68, a first water temperature sensor 69, a second water temperature sensor 70, and a third water temperature sensor 71.

The coolant circulation passage 61 is a passage through which the coolant circulates for cooling the fuel cell stack 2, and is connected to a coolant inlet port 26 of the fuel cell stack 2 at one end and to a coolant outlet port 27 of the fuel cell stack 2 at the other end. In the following description, the coolant outlet port 27 side is an upstream side and the coolant inlet port 26 side is a downstream side in the coolant circulation passage 61.

The radiator 62 is provided in the coolant circulation passage 61. The radiator 62 cools the coolant discharged from the fuel cell stack 2.

The bypass passage 63 is connected to the coolant circulation passage 61 at one end and to the three-way valve 64 at the other end so as to circulate the coolant while the coolant bypasses the radiator 62.

The three-way valve 64 is provided in the coolant circulation passage 61 downstream of the radiator 62. The three-way valve 64 switches a circulation path of the coolant depending on the temperature of the coolant. Specifically, when the temperature of the coolant is relatively high, the circulation path of the coolant is switched so that the coolant discharged from the fuel cell stack 2 is supplied via the radiator 62 again to the fuel cell stack 2. In contrast, when the temperature of the coolant is relatively low, the circulation path of the coolant is switched so that the coolant discharged from the fuel cell stack 2 flows through the bypass passage 63 without routing through the radiator 62 and is supplied again to the fuel cell stack 2.

The circulation pump 65 is provided in the coolant circulation passage 61 downstream of the three-way valve 64 so as to circulate the coolant.

The PTC heater 66 is provided in the bypass passage 63. The PTC heater 66 is supplied with electric power in a case where the fuel cell stack 2 is warmed up and the like to increase the temperature of the coolant.

The first purge valve circulation passage 67 is a passage for introducing the coolant to the water jacket (not shown) formed inside the first purge valve 49 so as to prevent the first purge valve 49 from being stuck by freezing. The first purge valve circulation passage 67 includes a first introduction passage 671 branching from the coolant circulation passage 61 downstream of the circulation pump 65 to introduce the coolant to the water jacket of the first purge valve 49, and a first return passage 672 for returning the coolant discharged from the water jacket of the first purge valve 49 again to the coolant circulation passage 61 upstream of the circulation pump 65.

The second purge valve circulation passage 68 is a passage for introducing the coolant to the water jacket (not shown) formed inside the second purge valve 50 so as to prevent the second purge valve 50 from being stuck by freezing. The second purge valve circulation passage 68 includes a second introduction passage 681 branching from the coolant circulation passage 61 downstream of the circulation pump 65 to introduce the coolant to the water jacket of the second purge valve 50, and a second return passage 682 for returning the coolant discharged from the water jacket of the second purge valve 50 again to the coolant circulation passage 61 upstream of the circulation pump 65.

The first water temperature sensor 69 is provided in the coolant circulation passage 61 in a vicinity of the coolant outlet port 27 of the fuel cell stack 2. The first water temperature sensor 69 detects a temperature (hereinafter referred to as "stack temperature") of the coolant discharged from the fuel cell stack 2.

The second water temperature sensor 70 is provided in the first return passage 672. The second water temperature sensor 70 detects a temperature (hereinafter referred to as "first purge valve temperature") of the coolant discharged from the water jacket of the first purge valve 49.

The third water temperature sensor 71 is provided in the second return passage 682. The third water temperature sensor 71 detects a temperature (hereinafter referred to as "second purge valve temperature") of the coolant discharged from the water jacket of the second purge valve 50.

The controller 7 is constructed by a microcomputer including a central processing unit (CPU), a read-only memory (ROM), a random access memory (RAM), and an input/output interface (I/O interface).

The controller 7 inputs signals from various sensors for detecting operation states of the fuel cell system 1, such as the airflow sensor 34, the pressure sensor 44, the first water temperature sensor 69, the second water temperature sensor 70, and the third water temperature sensor 71 as well as a current sensor 72 for detecting an output current of the fuel cell stack 2, a voltage sensor 73 for detecting an output voltage of the fuel cell stack 2, an accelerator stroke sensor 74 for detecting a depressed amount (hereinafter referred to as "accelerator operation amount") of an accelerator pedal, and an atmospheric pressure sensor 75 for detecting the atmospheric pressure.

The controller 7 periodically opens/closes the pressure regulating valve 43 based on those input signals, carries out the pulsation operation of periodically increasing/decreasing the anode pressure, and adjusts the opening degree of the purge valve 38 to adjust the flow rate of the anode off-gas discharged from the buffer tank 51, thereby maintaining the anode gas concentration inside the buffer tank 51 to a desired concentration.

By carrying out the pulsation operation, the impure gases such as nitrogen transmitted via the electrolyte membranes 111 from the cathode gas flow passages 131 to the anode gas flow passages 121 can be pushed into the buffer tank 51, and the impure gases are restrained from being accumulated in the anode gas flow passages 121 and interfering with the electrode reactions. Consequently, stable power generation can be carried out.

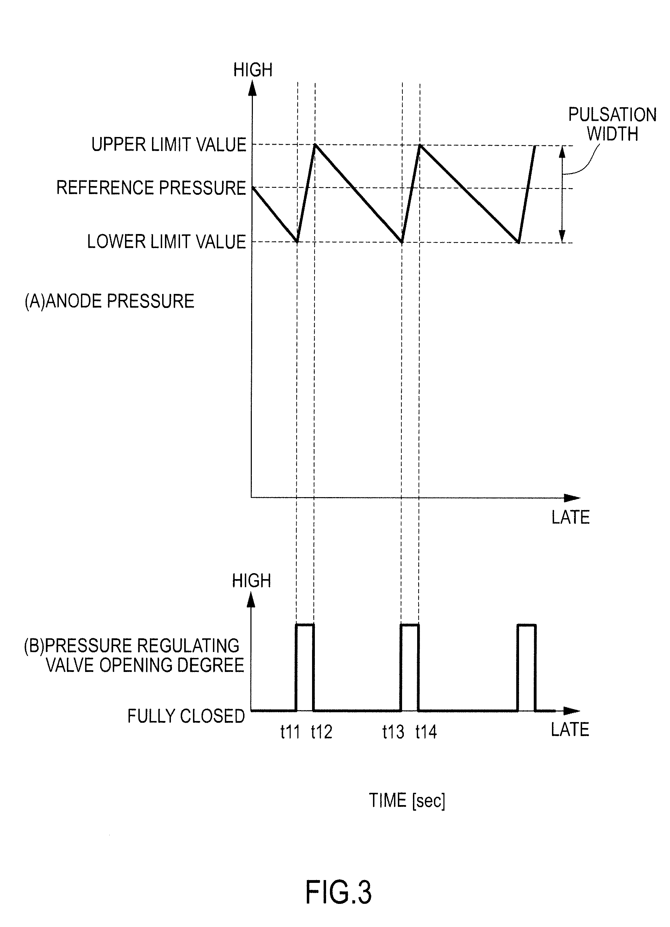

FIG. 3 is a graph showing the pulsation operation during a steady operation where an operation state of the fuel cell system 1 is constant.

As shown in part (A) of FIG. 3, the controller 7 calculates a target output of the fuel cell stack 2 based on the operation state of the fuel cell system 1, and calculates a reference pressure and a pulsation width of the anode pressure corresponding to the target output, thereby setting an upper limit value and a lower limit value of the anode pressure. Then, the controller 7 periodically increases/decreases the anode pressure between the set upper limit value and lower limit value of the anode pressure.

Specifically, when the anode pressure reaches the lower limit value at a time *t11*, the upper limit value is set as a target pressure of the anode pressure, and feedback control toward the target pressure is carried out. As a result, as shown in part (B) of FIG. 3, the pressure regulating valve 43 is opened to an opening degree which can increase the anode pressure at least to the upper limit value. In this state, the anode gas is supplied from the high pressure tank 41 to the fuel cell stack 2, and is discharged to the buffer tank 51.

When the anode pressure reaches the upper limit value at a time *t12*, the lower limit value is set as a target pressure of the anode pressure, and feedback control toward the target pressure is carried out. As a result, as shown in part (B) of FIG. 3, the pressure regulating valve 43 is fully closed, and the supply of the anode gas from the high pressure tank 41 to the fuel cell stack 2 is stopped. Then, the electrode reaction (1) described above consumes the anode gas left in the anode gas flow passages 121 inside the fuel cell stack 2 as the time elapses, and the anode pressure thus decreases by the consumed amount of the anode gas.

Moreover, when the anode gas left in the anode gas flow passages 121 is consumed, the pressure in the buffer tank 51 temporarily becomes higher than the pressure in the anode gas flow passages 121, and the anode off-gas flows backward from the buffer tank 51 to the anode gas flow passages 121. As a result, the anode gas left in the anode gas flow passages 121 and the anode gas in the anode off-gas that has flown backward to the anode gas flow passages 121 are consumed as the time elapses, and the anode pressure further decreases.

When the anode pressure reaches the lower limit value at a time *t13,* the pressure regulating valve 43 is opened as at the time *t1.* Then, when the anode pressure again reaches the upper limit value at a time *t14,* the pressure regulating valve 43 is fully closed.

While the pulsation operation is being carried out in this way, when the anode gas concentration (hydrogen concentration) in the buffer tank 51 is too low, the anode off-gas flows backward when the anode pressure is decreased, and the anode gas used for the electrode reaction at downstream portions in the anode gas flow passages becomes insufficient. As a result, the power generation efficiency decreases, and the fuel cell possibly deteriorates.

When the fuel cell system 1 is activated, the anode gas flow passages and the buffer tank 51 are filled with the air of the atmosphere which has entered the anode system while the fuel cell system 1 is stopped.

Therefore, when the fuel cell system 1 is activated, an activation purge operation of supplying the anode gas into the buffer tank 51 to increase the anode gas concentration (hydrogen concentration) in the buffer tank 51 to a desired concentration while the purge valves 49 and 50 are opened to discharge the air in the buffer tank 51 to the outside air needs to be carried out as a preparation operation before the pulsation operation.

A description is now given of the activation purge operation according to this embodiment.

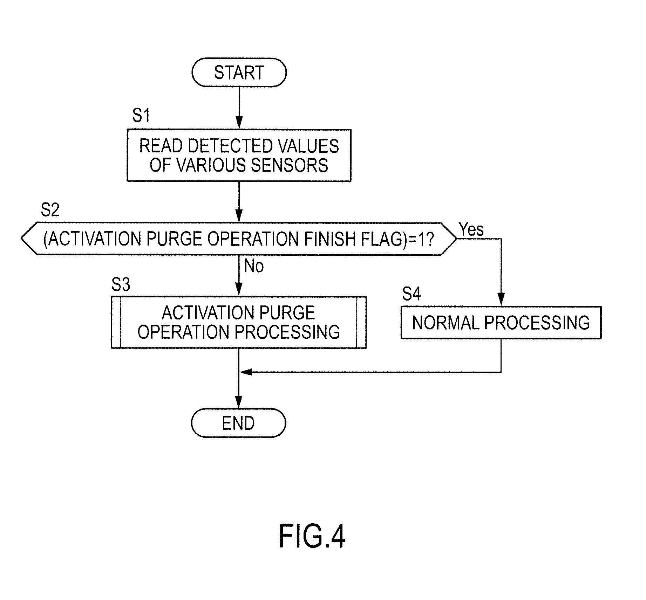

FIG. 4 is a flowchart illustrating control of the fuel cell system 1 according to this embodiment. When the fuel cell system 1 is activated, the controller 7 carries out the routine at a predetermined calculation cycle Δ*t* (such as 10 [milliseconds]).

In Step S1, the controller 7 reads the detected values of the various sensors.

In Step S2, the controller 7 determines whether an activation purge operation finish flag is set to 1 or not. The activation purge operation finish flag is set to 1 when the activation purge operation has been finished, and is set to 0 when the fuel cell system is activated. When the activation purge operation finish flag is set to 0, the controller 7 carries out processing of Step S3. On the other hand, when the activation purge operation finish flag is set to 1, the controller 7 carries out processing of Step S4.

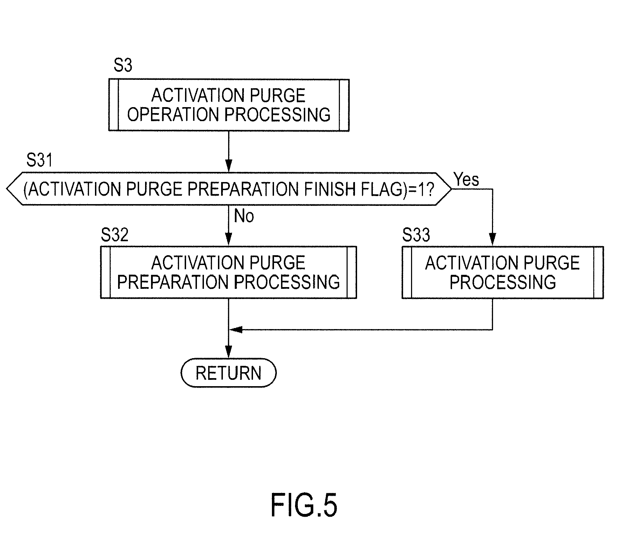

In Step S3, the controller 7 carries out activation purge operation processing. Referring to FIG. 5, a detailed description is later given of the activation purge operation processing.

In Step S4, the controller 7 carries out normal processing. During the normal processing, as described while referring to FIG. 3, the upper limit value and the lower limit value of the anode pressure are set depending on the target output of the fuel cell stack 2, and the pulsation operation of periodically increasing/ decreasing the anode pressure between the set upper limit value and lower limit value of the anode pressure is carried out. It should be noted that a control content itself of the pulsation operation is not a principal part of this invention, and a detailed flowchart thereof is therefore omitted.

FIG. 5 is a flowchart illustrating the activation purge operation processing.

In Step S31, the controller 7 determines whether an activation purge preparation finish flag is set to 1 or not. The activation purge preparation finish flag is set to 1 when preparation for the activation purge operation is finished, and is initially set to 0. When the activation purge preparation finish flag is set to 0, the controller 7 carries out processing of Step S32. On the other hand, when the activation purge preparation finish flag is set to 1, the controller 7 carries out processing of Step S33.

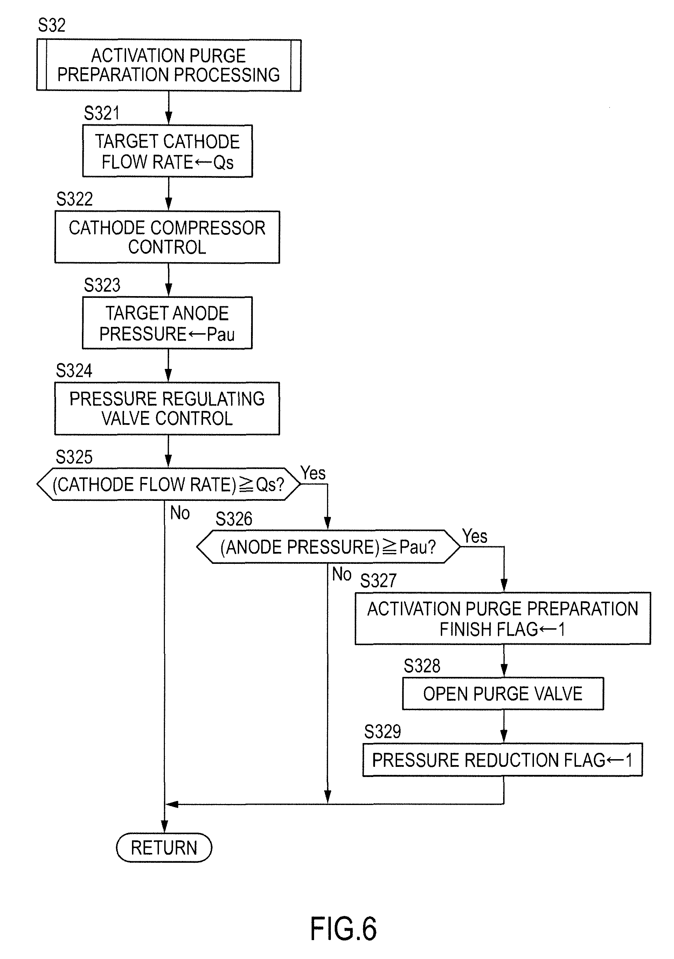

In Step S32, the controller 7 carries out activation purge preparation processing. Referring to FIG. 6, a detailed description is later given of the activation purge preparation processing.

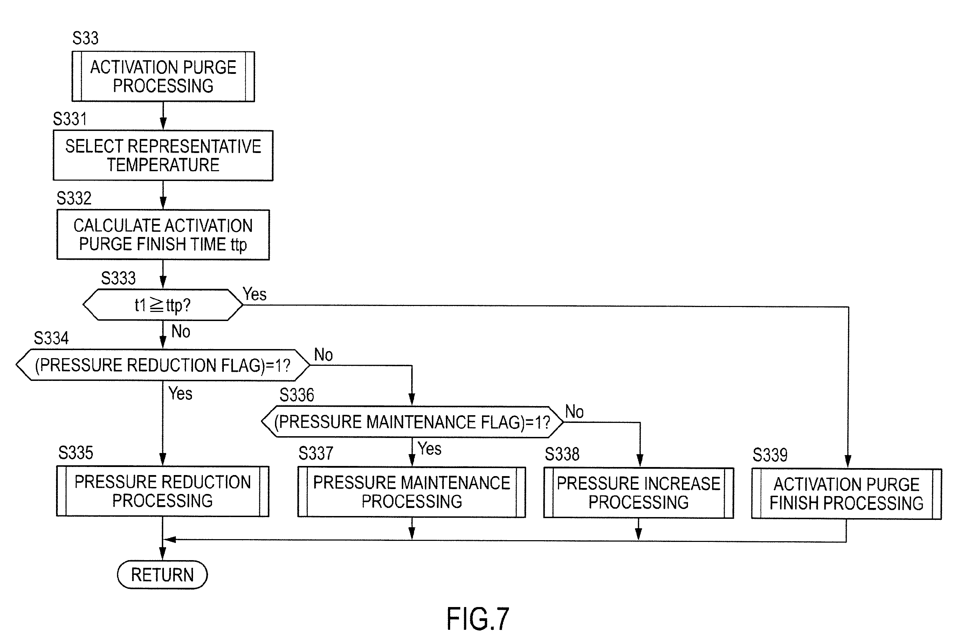

In Step S33, the controller 7 carries out activation purge processing. Referring to FIG. 7, a detailed description is later given of the activation purge processing.

FIG. 6 is a flowchart illustrating the activation purge preparation processing.

In Step S321, the controller 7 sets a target value of the cathode flow rate flowing during the activation purge operation to a predetermined activation target cathode flow rate Qs. The anode gas is supplied into the buffer tank 51 in order to increase the anode gas concentration (hydrogen concentration) in the buffer tank 51 during the activation purge operation. On this occasion, a part of the anode gas supplied to the buffer tank 51 is discharged via the purge passages to the cathode gas discharge passage 35. Thus, the activation target cathode flow rate Qs is set to such a value that the anode gas concentration in the outside-air discharged gas is less than a predetermined flammable concentration. The activation target cathode flow rate Qs is a value determined in advance by experiments and the like.

In Step S322, the controller 7 applies feedback control to the cathode compressor 33 so that the cathode flow rate reaches the activation target cathode flow rate Qs.

In Step S323, the controller 7 sets the target value of the anode pressure to a predetermined activation target anode upper limit pressure *Pau*. The activation target anode upper limit pressure *Pau* is set to a value capable of pushing the air in the cathode gas flow passages into the buffer tank 51 along with the anode gas. The activation target anode upper limit pressure *Pau* is a value determined in advance by experiments and the like.

In Step S324, the controller 7 applies feedback control to the pressure regulating valve 43 so that the anode pressure reaches the activation target anode upper limit pressure *Pau*.

In Step S325, the controller 7 determines whether the cathode flow rate reaches the activation target cathode flow rate *Qs* or not. When the cathode flow rate is less than the activation target cathode flow rate *Qs*, the controller 7 finishes the processing for this time, and when the cathode flow rate is equal to or more than the activation target cathode flow rate Qs, the controller 7 carries out processing of Step S326.

In Step S326, when the anode pressure is less than the activation target anode upper limit pressure *Pau*, the controller 7 finishes the processing for this time. On the other hand, when the anode pressure is equal to or more than the activation target anode upper limit pressure *Pau*, the controller 7 determines that the preparation for the activation purge operation has been completed, and carries out processing of Step S327.

In Step S327, the controller 7 sets the activation purge preparation finish flag to 1.

In Step S328, the controller 7 opens the first purge valve 49 and the second purge valve 50.

In Step S329, the controller 7 sets a pressure reduction flag to 1. The pressure reduction flag is set to 1 when the anode pressure that has been increased to the activation target anode upper limit pressure *Pau* is decreased to a predetermined pressure (activation target anode lower limit pressure *Pad* described later), and is initially set to 0.

FIG. 7 is a flowchart illustrating the activation purge processing.

In Step S331, the controller 7 selects the highest one of the stack temperature, the first purge valve temperature, and the second purge valve temperature as a representative temperature.

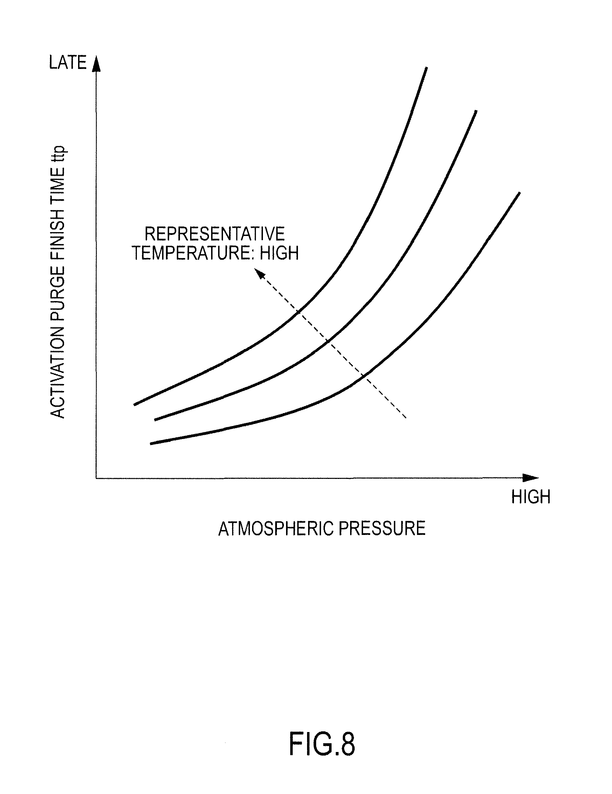

In Step S332, the controller 7 refers to a map of FIG. 8, thereby calculating an activation purge finish time *ttp* based on the representative temperature and the atmospheric pressure. The activation purge finish time is a time when such a determination that the anode gas concentration

(hydrogen concentration) in the buffer tank 51 has been increased by the activation purge operation to a predetermined concentration enabling start of the pulsation operation can be made. In other words, the activation purge finish time is a time when such a determination that a predetermined amount of air out of the air present in the anode system has been discharged to the outside air by the activation purge operation can be made.

As shown in the map of FIG. 8, the activation purge finish time increases as the representative temperature increases and as the atmospheric pressure increases.

This is because the flow rates of the gas passing through the first purge valve 49 and the second purge valve 50 change depending on the temperature of the passing gas and a before/after pressure difference between the upstream side and the downstream side of each of the first purge valve 49 and the second purge valve 50. Specifically, as the temperature of the passing gas increases or the before/after pressure difference decreases, the flow rate of the gas passing through each of the first purge valve 49 and the second purge valve 50 decreases.

According to this embodiment, the activation purge finish time is calculated for a case where the flow rate of the gas passing through the first purge valve 49 and the second purge valve 50 is minimum while the temperature of the gas passing through the first purge valve 49 and the second purge valve 50 is assumed to be the highest temperature out of the stack temperature, the first purge valve temperature, and the second purge valve temperature. As a result, when the pulsation operation starts, the anode gas concentration (hydrogen concentration) in the buffer tank 51 has surely been increased to the desired concentration.

Moreover, the atmospheric pressure is used as the parameter for calculating the activation purge finish time according to this embodiment. The before/after pressure difference of the first purge valve 49 and the second purge valve 50 is a pressure difference between the anode pressure and the atmospheric pressure, and the before/after pressure difference of the first purge valve 49 and the second purge valve 50 can be estimated by acquiring the atmospheric pressure. In other words, the decrease in necessary purge period can be detected by detecting the state where the atmospheric pressure decreases and the before/after pressure difference of the first purge valve 49 and the second purge valve 50 increases.

In Step S333, the controller 7 determines whether a purge timer *t1* has become equal to or more than the activation purge finish time *ttp* or not. The purge timer *t1* is an integrated value of the time period during which the gas (the air or the mixture of the air and the anode gas) accumulated in the buffer tank 51 is discharged via the first purge passage 47 and the second purge passage 48 to the outside air. The controller 7 carries out processing of Step S334 when the purge timer *t1* is less than the activation purge finish time *ttp.* On the other hand, the controller 7 carries out processing of Step S339 when the purge timer *t1* is equal to or more than the activation purge finish time *ttp.*

In Step S334, the controller 7 determines whether the pressure reduction flag is set to 1 or not. The controller 7 carries out processing of Step S335 when the pressure reduction flag is set to 1, and carries out processing of Step S336 when the pressure reduction flag is set to 0.

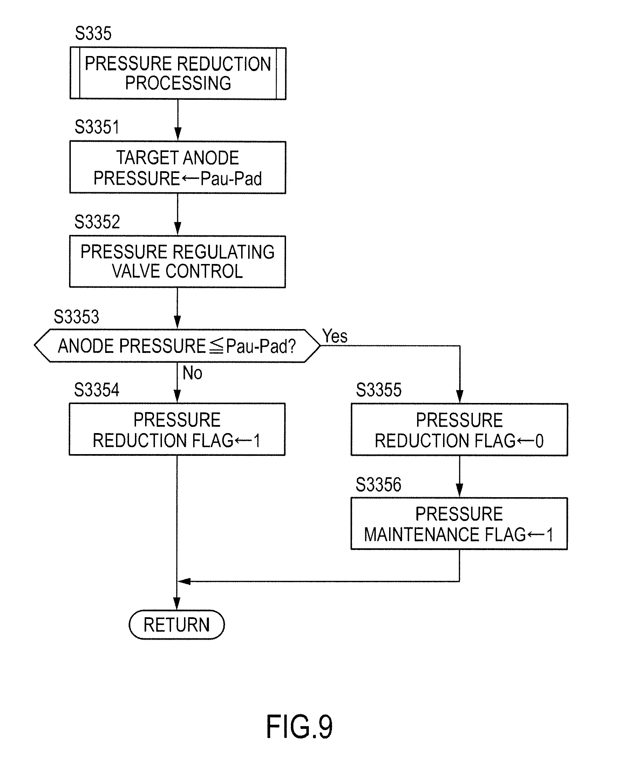

In Step S335, the controller 7 carries out pressure reduction processing. Referring to FIG. 9, a description is later given of the pressure reduction processing.

In Step S336, the controller 7 determines whether a pressure maintenance flag is set to 1 or not. The pressure maintenance flag is set to 1 when the anode pressure that has been decreased to a predetermined pressure (activation target anode lower limit pressure *Pad* described later) by the pressure reduction processing is maintained at the predetermined pressure, and is initially set to 0. The controller 7 carries out processing of Step S337 when the pressure maintenance flag is set to 1, and carries out processing of Step S338 when the pressure maintenance flag is set to 0.

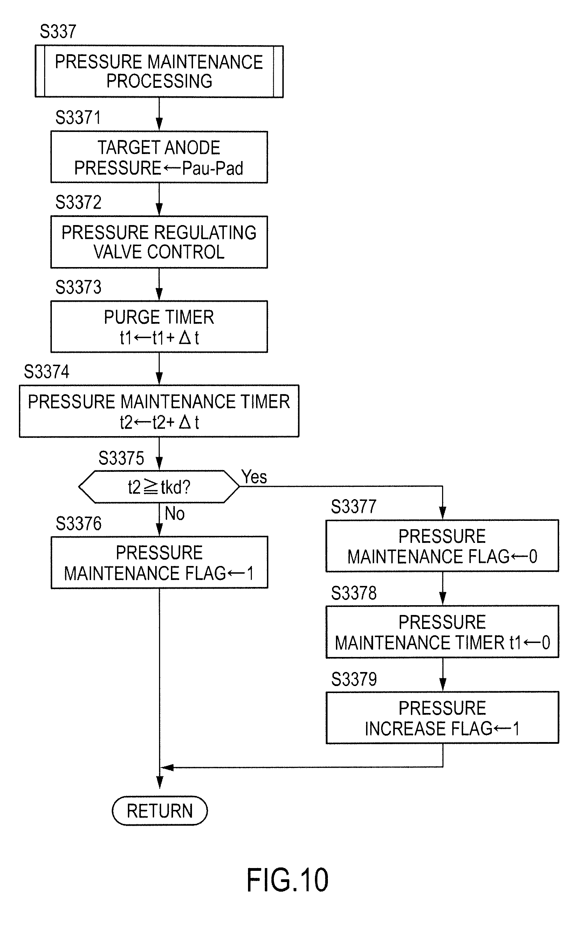

In Step S337, the controller 7 carries out pressure maintenance processing. Referring to FIG. 10, a description is later given of the pressure maintenance processing.

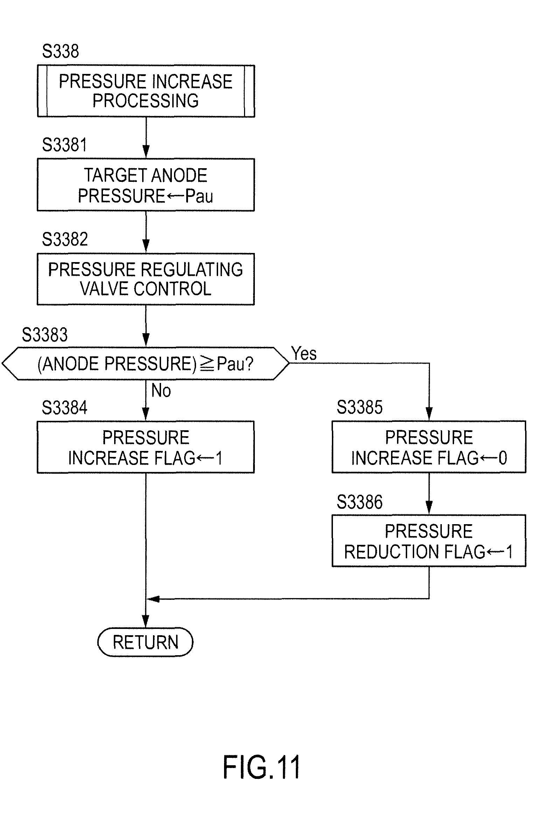

In Step S338, the controller 7 carries out pressure increase processing. Referring to FIG. 11, a description is later given of the pressure increase processing.

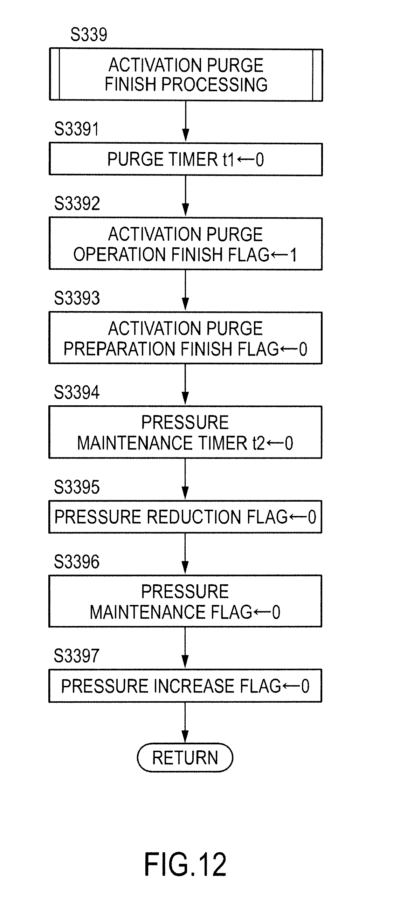

In Step S339, the controller 7 carries out activation purge finish processing. Referring to FIG. 12, a description is later given of the activation purge finish processing.

FIG. 9 is a flowchart illustrating the pressure reduction processing.

The pressure reduction processing is processing which is carried out to discharge the mixed gas of the anode gas and the air in the buffer tank 51 from the first purge passage 47 and the second purge passage 48 to the cathode gas discharge passage 35 after the anode gas is supplied to the buffer tank 51, and to decrease the anode pressure to control the mixed gas in the buffer tank 51 to flow backward to the first anode gas discharge passage 45 and the second gas discharge passage.

In Step S3351, the controller 7 sets the target value of the anode pressure to the predetermined activation target anode lower limit pressure Pad. The activation target anode lower limit pressure Pad is set to a value at which the mixed gas in the buffer tank 51 is pushed back toward an upstream side (fuel cell stack 2 side) of at least the connection portion between the first anode gas discharge passage 45 and the first purge passage 47 and the connection portion between the second anode gas discharge passage 46 and the second purge passage 48. The activation target anode lower limit pressure *Pad* is a value lower by a predetermined pressure than the activation target anode upper limit pressure *Pau*, and is a value determined in advance by experiments and the like. It should be noted that if the anode gas in the anode gas flow passages 121 does not become insufficient, the activation target anode upper limit pressure *Pau* may be set to such a value that the mixed gas in the buffer tank 51 flows backward even up to the anode gas flow passages 121.

In Step S3352, the controller 7 applies feedback control to the pressure regulating valve 43 so that the anode pressure reaches the activation target anode lower limit pressure *Pad*.

In Step S3353, the controller 7 determines whether the anode pressure becomes equal to or less than the activation target anode lower limit pressure or not. When the anode pressure is more than the activation target anode lower limit pressure, the controller 7 carries out processing of Step S3354. On the other hand, when the anode pressure is equal to or less than the activation target anode lower limit pressure, the controller 7 carries out processing of Step S3355.

In Step S3354, the controller 7 sets the pressure reduction flag to 1. In other words, the controller 7 maintains the pressure reduction flag to 1.

In Step S3355, the controller 7 sets the pressure reduction flag to 0.

In Step S3356, the controller 7 sets the pressure maintenance flag to 1.

FIG. 10 is a flowchart illustrating the pressure maintenance processing.

The anode pressure is maintained to the activation target anode lower limit pressure *Pad* in the pressure maintenance processing. In other words, the controller 7 maintains the state where the mixed gas in the buffer tank 51 is pushed back toward the upstream side (fuel cell stack 2 side) of at least the connection portion between the first anode gas discharge passage 45 and the first purge passage 47 and the connection portion between the second anode gas discharge passage 46 and the second purge passage 48. As a result, the mixed gas in the buffer tank 51 can be discharged from the first purge passage 47 and the second purge passage 48 to the cathode gas discharge passage 35, and the anode gas concentration (hydrogen concentration) in the buffer tank 51 can be increased by the supply of the anode gas from the upstream when the pressure increases subsequently.

In Step S3371, the controller 7 sets the target value of the anode pressure to the activation target anode lower limit pressure *Pad*. In other words, the controller 7 maintains the target value of the anode pressure at the activation target anode lower limit pressure *Pad* set during the pressure reduction processing.

In Step S3372, the controller 7 applies feedback control to the pressure regulating valve 43 so that the anode pressure is maintained to the activation target anode lower limit pressure *Pad*.

In Step S3373, the controller 7 updates the purge timer *t1*. Specifically, the controller 7 updates the purge timer *t1* to a value acquired by adding the calculation period Δ*t* to a previous value of the purge timer *t1.*

In Step S3374, the controller 7 updates a pressure maintenance timer *t2*. Specifically, the controller 7 updates the pressure maintenance timer *t2* to a value acquired by adding a calculation period Δ*t* to a previous value of the pressure maintenance timer *t2*.

In Step S3375, the controller 7 determines whether the pressure maintenance timer *t2* has become equal to or more than a predetermined pressure maintenance finish time *tkd* or not. The controller 7 carries out processing of Step S3376 when the pressure maintenance timer *t2* is less than the pressure maintenance finish time *tkd.* On the other hand, the controller 7 carries out processing of Step S3377 when the pressure maintenance timer *t2* is equal to or more than the pressure maintenance finish time *tkd.*

In Step S3376, the controller 7 sets the pressure maintenance flag to 1. In other words, the controller 7 maintains the pressure maintenance flag to 1.

In Step S3377, the controller 7 sets the pressure maintenance flag to 0.

In Step S3378, the controller 7 updates the pressure maintenance timer *t1* to 0.

In Step S3379, the controller 7 sets the pressure increase flag to 1. The pressure increase flag is set to 1 when the anode pressure that has been maintained at the activation target anode lower limit pressure *Pad* by the pressure maintenance processing for a predetermined period is increased to the activation target anode upper limit pressure *Pau* again, and is initially set to 0.

FIG. 11 is a flowchart illustrating the pressure increase processing.

The pressure increase processing is processing of again increasing the anode pressure to the activation target anode upper limit pressure *Pau* after the pressure maintenance processing is finished, and supplying the buffer tank 51 with the anode gas, thereby increasing the anode gas concentration (hydrogen concentration) in the buffer tank 51.

In Step S3381, the controller 7 sets the target value of the anode pressure to the activation target anode upper limit pressure *Pau*.

In Step S3382, the controller 7 applies feedback control to the pressure regulating valve 43 so that the anode pressure is increased to the activation target anode upper limit pressure *Pau*.

In Step S3383, the controller 7 determines whether the anode pressure has become equal to or more than the activation target anode upper limit pressure or not. When the anode pressure is less than the activation target anode upper limit pressure, the controller 7 carries out processing of Step S3384. On the other hand, when the anode pressure is equal to or more than the activation target anode upper limit pressure, the controller 7 carries out processing of Step S3385.

In Step S3384, the controller 7 sets the pressure increase flag to 1. In other words, the controller 7 maintains the pressure increase flag to 1.

In Step S3385, the controller 7 sets the pressure increase flag to 0.

In Step S3386, the controller 7 sets the pressure reduction flag to 1.

FIG. 12 is a flowchart illustrating the activation purge finish processing.

In Step S3391, the controller 7 updates the purge timer *t1* to 0.

In Step S3392, the controller 7 sets the activation purge operation finish flag to 1.

In Step S3393, the controller 7 sets the activation purge preparation finish flag to 0.

In Step S3394, the controller 7 updates the pressure maintenance timer *t2* to 0.

In Step S3395, the controller 7 sets the pressure reduction flag to 0.

In Step S3396, the controller 7 sets the pressure maintenance flag to 0.

In Step S3397, the controller 7 sets the pressure increase flag to 0.

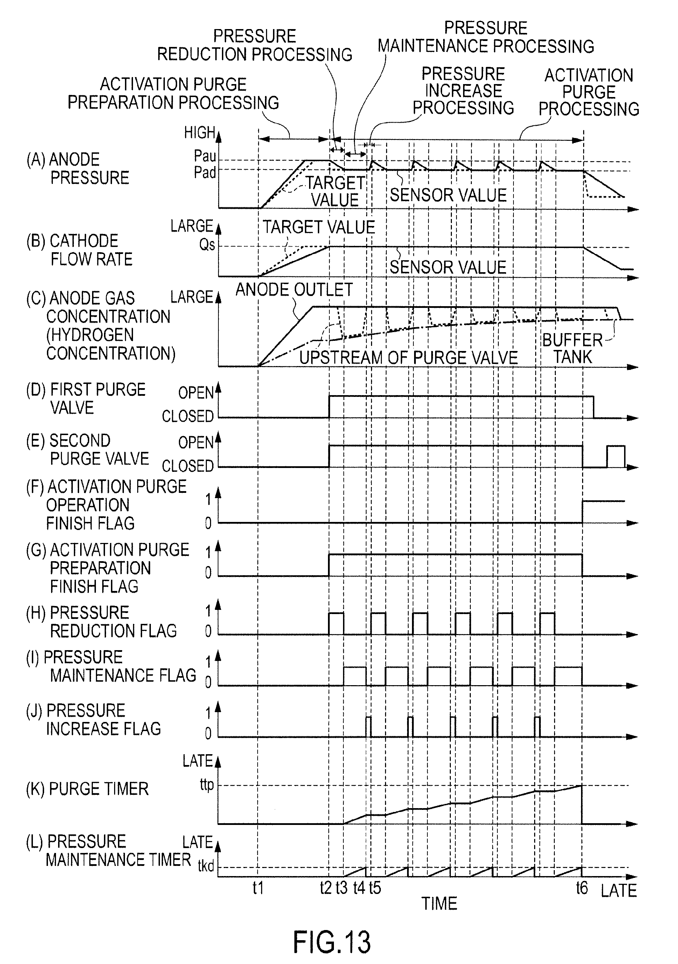

FIG. 13 is a time chart showing a control operation of the fuel cell system according to this embodiment. In the following, the step numbers in the flowcharts of FIGS. 4 to 12 are also described in order to clarify a correspondence to the flowcharts.

When the fuel cell system is activated at a time *t1,* because the activation purge operation finish flag and the activation purge preparation finish flag are each set to 0 (parts (F) and (G) of FIG. 13; No in S2 and No in S31) at the time when the fuel cell system is activated, the activation purge preparation processing is carried out (S32).

When the activation purge preparation processing is carried out, the feedback control is applied to the cathode compressor 33 so that the cathode flow rate increases at a predetermined change rate to the activation target cathode flow rate Qs (part (B) of FIG. 13; S321 and S322), and the feedback control is applied to the pressure regulating valve 43 so that the anode pressure increases at a predetermined change rate to the activation target anode upper limit pressure *Pau* (part (A) of FIG. 13; S323 and S324).

When the cathode flow rate increases to the activation target cathode flow rate and the anode pressure increases to the activation target anode upper limit pressure at a time *t2* (parts (A) and (B) of FIG. 13; Yes in S325 and Yes in S326), the activation purge preparation finish flag is set to 1 (part (G) of FIG. 13; S327), and the first purge valve 49 and the second purge valve 50 are opened (parts (D) and (E) of FIG. 13; S328). Moreover, the pressure reduction flag is set to 1 (part (H) of FIG. 13; S329).

When the activation purge preparation finish flag is set to 1, the activation purge processing is then carried out (Yes in S31, and S33). The value of the purge timer *t1* is set to the initial value 0 (part (K) of FIG. 13; No in S333) and the pressure reduction flag is set to 1 (part (H) of FIG. 13; Yes in S334) when the activation purge processing starts, and the pressure reduction processing is thus carried out (S335).

When the pressure reduction processing is carried out, the feedback control is applied to the pressure regulating valve 43 so that the anode pressure decreases to the activation target anode lower limit pressure *Pad* (part (A) of FIG. 13; S3351 and S3352).

When the anode pressure decreases to the activation target anode lower limit pressure *Pad* at a time *t3* (part (A) of FIG. 13; Yes in S3353), the pressure reduction flag is set to 0 (part (H) of FIG. 13; S3355), and the pressure maintenance flag is set to 1 (part (I) of FIG. 13; S3356).

When the pressure maintenance flag is set to 1, and the pressure maintenance processing is carried out (No in S334, Yes in S336, and S337), the anode pressure is maintained at the activation target anode lower limit pressure *Pad* (part (A) of FIG. 13). Then, the period during which the anode pressure is maintained at the activation target anode lower limit pressure *Pad* is counted by the pressure maintenance timer *t2* (part (L) of FIG. 13; S3374).

Moreover, while the anode pressure is maintained at the activation target anode lower limit pressure *Pad*, the mixed gas in the buffer tank 51 passes through the first purge passage 47 and the second purge passage 48, and is discharged to the cathode gas discharge passage 35. Then, the period during which the anode pressure is maintained at the activation target anode lower limit pressure *Pad* is counted by the purge timer *t1* (part (K) of FIG. 13; S3373).

When an elapsed period from the maintenance of the anode pressure at the activation target anode lower limit pressure *Pad* reaches the pressure maintenance finish time *tkd* at a time *t4* (part (L) of FIG. 13; Yes in S3375), the pressure maintenance flag is set to 0 (part (I) of FIG. 13; S3373), and the pressure maintenance timer *t2* is reset to 0 (part (L) of FIG. 13; S3378). Moreover, the pressure increase flag is set to 1 (part (J) of FIG. 13; S3379).

When the pressure increase flag is set to 1, and the purge timer *t1* counted up during the pressure maintenance processing is less than the activation purge finish time *ttp* (No in S333, No in S334, and No in S336), the pressure increase processing is carried out (S338).

When the pressure increase processing is carried out, the feedback control is applied to the pressure regulating valve 43 so that the anode pressure is again increased to the activation target anode upper limit pressure *Pau* (part (A) of FIG. 13; S3381 and S3382).

When the anode pressure increases to the activation target anode upper limit pressure *Pau* at a time *t5* (part (A) of FIG. 13; Yes in S3383), the pressure increase flag is reset to 0 (part (J) of FIG. 13; S3385), and the pressure decrease flag is again set to 1 (part (H) of FIG. 13; S3386).

Then, the pressure reduction processing, the pressure maintenance processing, and the pressure increase processing are repeated, thereby increasing the anode gas concentration (hydrogen concentration) in the buffer tank 51 to a desired concentration until the purge timer *t1* reaches the activation purge finish time *ttp* at a time *t6* (part (K) of FIG. 13; Yes in S333).

According to this embodiment, the air which has entered the anode system while the fuel cell system 1 is stopped is pushed into the buffer tank 51 along with the anode gas by increasing the anode pressure to the activation target anode upper limit pressure *Pau* when the fuel cell system 1 is activated. Then, the mixed gas in the buffer tank 51 is controlled to flow backward to the first anode gas discharge passage 45 and the second anode gas discharge passage 46 by decreasing the anode pressure to the target anode lower limit pressure *Pad.*

Moreover, the first purge valve 49 and the second purge valve 50 are opened in accordance with the control described above when the fuel cell system 1 is activated.

As a result, the mixed gas in the buffer tank 51 can be discharged via the first purge passage 47 and the second purge passage 48 to the cathode gas discharge passage 35 when the fuel cell system 1 is activated, thereby gradually increasing the anode gas concentration (hydrogen concentration) in the buffer tank 51. Thus, even if the anode off-gas in the buffer tank flows backward to the anode gas flow passages 121 when the pulsation operation is carried out, the anode gas used for the electrode reaction in the downstream areas of the anode gas flow passages 121 is prevented from becoming insufficient. Thus, the power generation efficiency is prevented from decreasing, and the fuel cell is also prevented from deteriorating.

Moreover, in this embodiment, only when the mixed gas in the buffer tank 51 is actually discharged via the first purge passage 47 and the second purge passage 48 to the cathode gas discharge passage 35, in other words, only when the pressure maintenance processing is carried out, the purge timer *t1* is counted up.

This is because not the mixed gas in the buffer tank 51 but the anode gas supplied from the high pressure tank 41 is possibly discharged via the first purge passage 47 and the second purge passage 48 to the cathode gas discharge passage 35 during the pressure reduction processing and the pressure increase processing.

In this embodiment, the state where the anode gas concentration (hydrogen concentration) in the buffer tank 51 has increased to a desired concentration can be precisely determined by counting up the purge timer *t1* only during the pressure maintenance processing.

### (Second Embodiment)

A description is now given of a second embodiment of this invention. Components according to the following embodiment providing the same functions as those of the first embodiment are denoted by the same reference symbols, and a redundant description thereof is properly omitted.

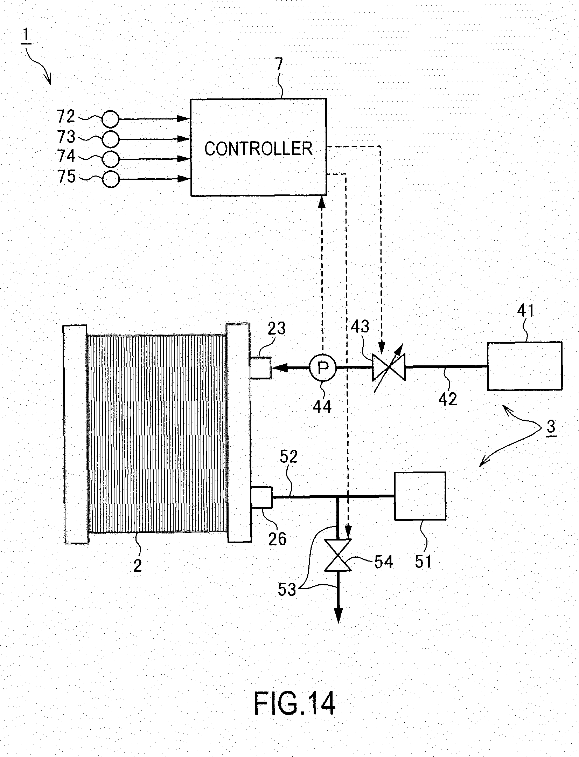

FIG. 14 is a schematic configuration diagram of a fuel cell system 1 of an anode gas non-circulation type according to the second embodiment of this invention. FIG. 2 omits the cathode gas supply/discharge apparatus 3 and the stack cooling apparatus 6, and illustrates a configuration including only one purge valve 54 for the sake of simplicity.

The anode gas supply/discharge apparatus 4 of the fuel cell system 1 according to the second embodiment of this invention includes the high pressure tank 41, the anode gas supply passage 42, the pressure regulating valve 43, the pressure sensor 44, the buffer tank 51, an anode gas discharge passage 52, a purge passage 53, and a purge valve 54.

Functions of the high pressure tank 41, the anode gas supply passage 42, the pressure regulating valve 43, the pressure sensor 44, and the buffer tank 51 are the same as those of the first embodiment.

The anode gas discharge passage 52 is connected to the anode gas outlet port 26 at one end and to the buffer tank 51 at the other end.

The purge passage 53 is connected to the anode gas discharge passage 52 at one end, and has an open end at the other end. The anode off-gas stored in the buffer tank 51 temporarily flows backward through the anode gas discharge passage 52, passes through the purge passage 53, and is discharged from the open end to the outside air.

The purge valve 54 is provided in the purge passage 53. The purge valve 54 is an electromagnetic valve controlled to open/close by the controller. When the purge valve 54 is opened, the anode off-gas stored in the buffer tank 51 passes through the purge passage 53, and is discharged from the open end to the outside air.

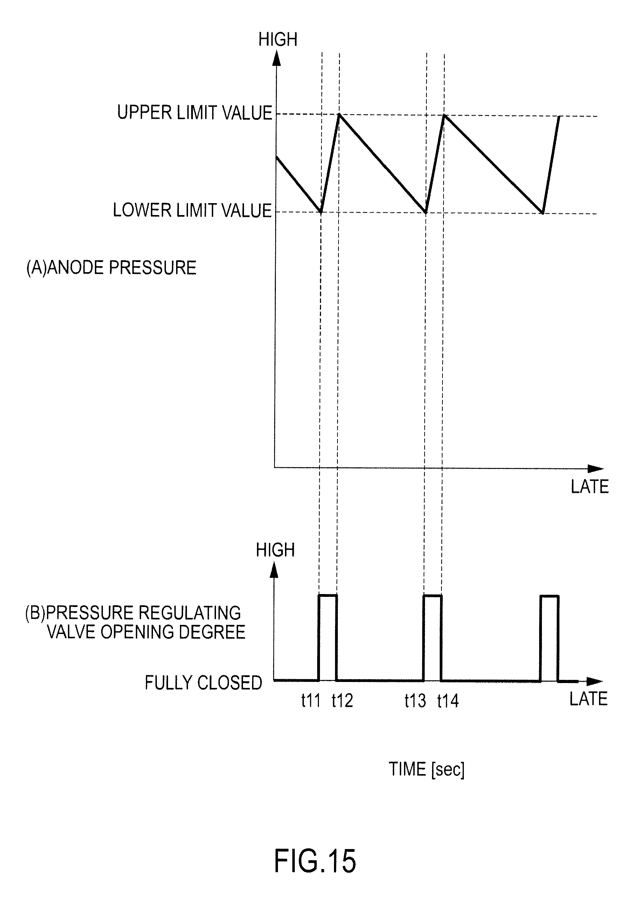

FIG. 15 is a graph showing the pulsation operation during a steady operation where an operation state of the fuel cell system 1 is constant.

As shown in part (A) of FIG. 15, the controller 7 calculates a target output of the fuel cell stack 2 based on the operation state of the fuel cell system 1, and calculates a reference pressure and a pulsation width of the anode pressure corresponding to the target output, thereby setting an upper limit value and a lower limit value of the anode pressure. Then, the controller 7 periodically increases/decreases the anode pressure between the set upper limit value and lower limit value of the anode pressure.

Specifically, when the anode pressure reaches the lower limit pressure at a time *t11*, as shown in part (B) of FIG. 15, feedback control is applied to the opening degree of the pressure regulating valve 43 so that the anode pressure reaches the upper limit pressure. As a result, as shown in part (A) of FIG. 15, the anode pressure increases from the lower limit pressure toward the upper limit pressure. In this state, the anode gas is supplied from the high pressure tank 41 to the fuel cell stack 2, and the anode off-gas is pushed into the buffer tank 51.

When the anode pressure reaches the upper limit pressure at a time *t12,* as shown in part (B) of FIG. 15, feedback control is applied to the opening degree of the pressure regulating valve 43 so that the anode pressure reaches the lower limit pressure. As a result of the feedback control, the opening degree of the pressure regulating valve 43 usually becomes fully closed, and the supply of the anode gas from the high pressure tank 41 to the fuel cell stack 2 is stopped. Then, the electrode reaction (1) consumes the anode gas left in the anode gas flow passages 121 inside the fuel cell stack as the time elapses, and as shown in part (A) of FIG. 15, the anode pressure thus decreases in accordance with the consumption of the anode gas.

Then, when the anode gas left in the anode gas flow passages 121 is consumed, the pressure in the buffer tank 51 temporarily becomes higher than the pressure in the anode gas flow passages 121, and the anode off-gas flows backward from the buffer tank 51 to the fuel cell stack 2 side. In this embodiment, the anode off-gas accumulated in the buffer tank 51 is discharged to the outside by opening the purge valve 54 at this timing.

This is because the anode off-gas flowing through an upstream portion of the purge valve 54, namely the anode gas discharge passage 52 from the fuel cell stack 2 side to the buffer tank 51 side when the anode pressure is increased is relatively high in anode gas concentration, and the anode gas is discharged wastefully to the outside when the purge valve 54 is opened at this timing. On the other hand, the anode off-gas flowing backward through the anode gas discharge passage 52 from the buffer tank 51 side to the fuel cell stack 2 side when the anode pressure is decreased is the gas accumulated in the buffer tank 51, and is relatively low in anode gas concentration (in other words, high in nitrogen concentration). Thus, the anode gas is restrained from being wastefully discharged, and the nitrogen transmitted from the cathode side to the anode gas flow passages 121 is efficiently discharged to the outside by opening the purge valve 54 at this timing.

Moreover, if the anode off-gas low in anode gas concentration flows into the inside of the fuel cell stack 2 when the anode pressure decreases, the anode gas concentration decreases more at downstream portions of the anode gas flow passages 121, resulting in a decrease in power generation efficiency, but the purge valve 54 opens when the anode pressure decreases, thereby restraining the decrease in power generation efficiency caused by the entrance of the anode off-gas low in anode gas concentration into the inside of the fuel cell stack 2.

A description is now given of pulsation control and purge control according to this embodiment.

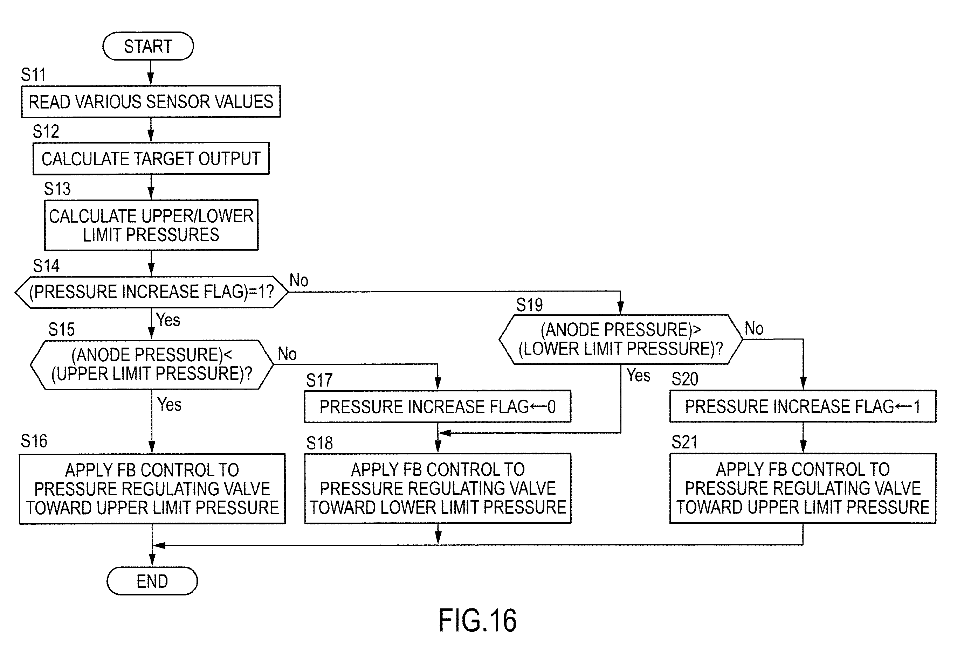

FIG. 16 is a flowchart illustrating the pulsation control according to this embodiment.

In Step S11, the controller 7 reads the detected values of the various sensors.

In Step S12, the controller 7 calculates target output power of the fuel cell stack 2 based on the operation state of the fuel cell system 1.

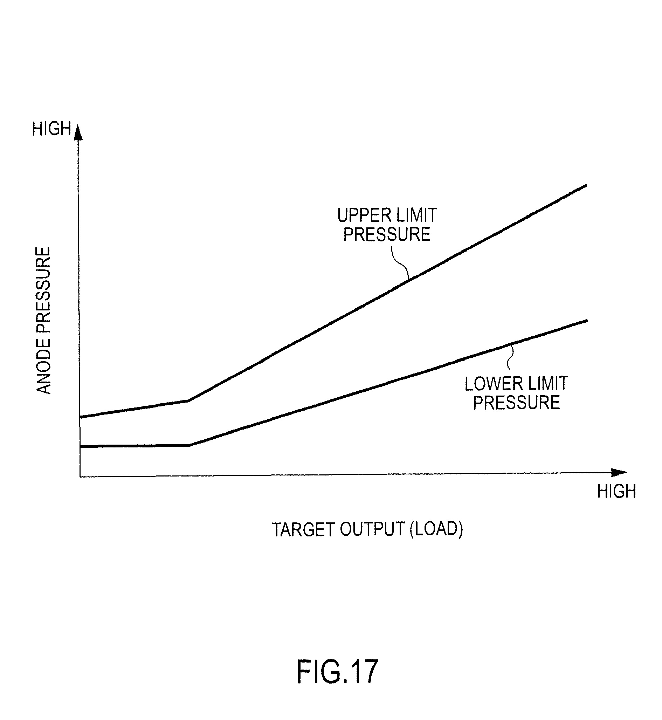

In Step S13, the controller 7 refers to a table of FIG. 17 to set an upper limit pressure and a lower limit pressure of the anode pressure based on the target output power.

In Step S14, the controller 7 determines whether a pressure increase flag is set to 1 or not. The pressure increase flag is set to 1 when the anode pressure increases, and is initialized to 1. The controller 7 carries out processing of Step S5 when the pressure increase flag is set to 1, and carries out processing of Step S9 when the pressure increase flag is set to 0. It should be noted that the state where the pressure increase flag is set to 0 is the state where the anode pressure is decreasing.

In Step S15, the controller 7 determines whether the anode pressure detected by the pressure sensor 44 is less than the upper limit pressure or not. The controller 7 carries out processing of Step S16 when the anode pressure is less than the upper limit pressure, and carries out processing of Step S17 when the anode pressure is equal to or more than the upper limit pressure.

In Step S16, the controller 7 applies the feedback control to the opening degree of the pressure regulating valve 43 so that the anode pressure reaches the upper limit pressure.

In Step S17, the controller 7 sets the pressure increase flag to 0.

In Step S18, the controller 7 applies the feedback control to the opening degree of the pressure regulating valve 43 so that the anode pressure reaches the lower limit pressure.

In Step S19, the controller 7 determines whether the anode pressure detected by the pressure sensor 44 is more than the lower limit pressure or not. The controller 7 carries out processing of Step S18 when the anode pressure is more than the lower limit pressure, and carries out processing of Step S20 when the anode pressure is less than the lower limit pressure.

In Step S20, the controller 7 sets the pressure increase flag to 1.

In Step S21, the controller 7 applies the feedback control to the opening degree of the pressure regulating valve 43 so that the anode pressure reaches the upper limit pressure.

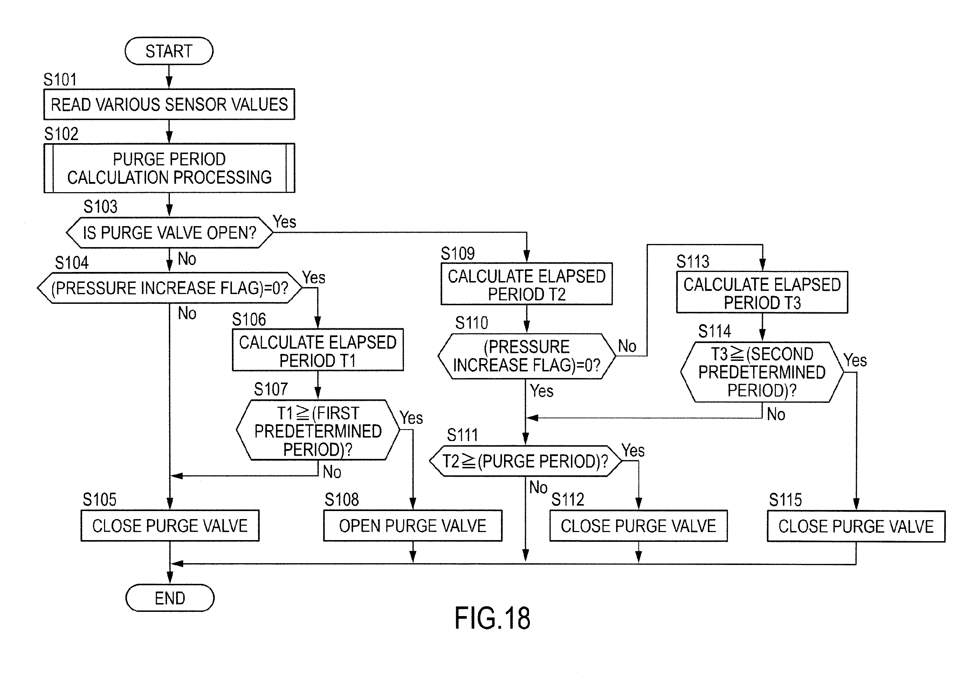

FIG. 18 is a flowchart illustrating the purge control according to this embodiment.

In Step S101, the controller 7 reads the detected values of the various sensors.

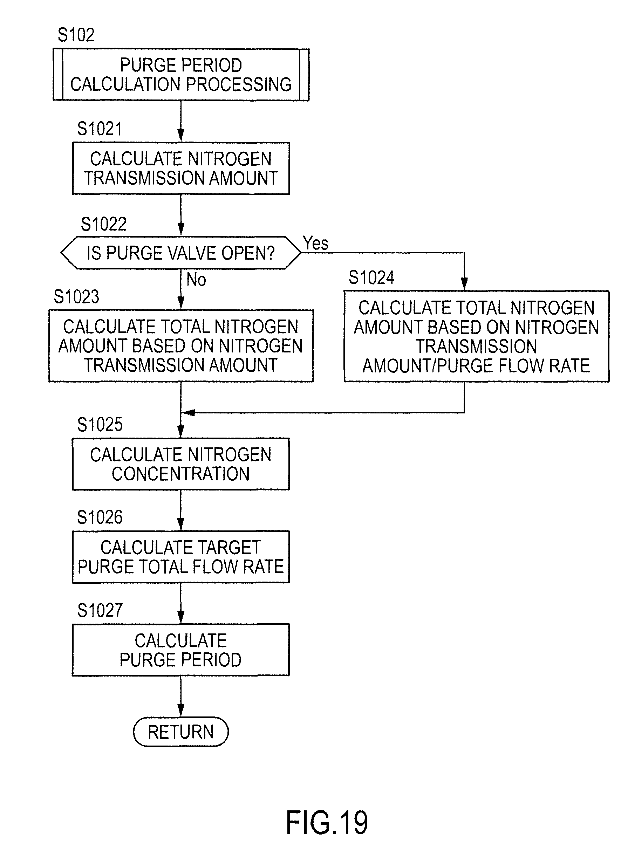

In Step S102, the controller 7 carries out processing (hereinafter referred to as "purge period calculation processing") for calculating a period (hereinafter referred to as "purge period") during which the purge valve 54 is opened. Referring to FIG. 19, a detailed description is later given of the purge period calculation processing.

In Step S103, the controller 7 determines whether the purge valve 54 is opened or not. The controller 7 carries out processing of Step S104 when the purge valve 54 is closed, and carries out processing of Step S110 when the purge valve 54 is opened.

In Step S104, the controller 7 determines whether the pressure increase flag is set to 0 or not, in other words, whether the anode pressure is decreasing or not. The controller 7 carries out processing of Step S106 when the pressure increase flag is 0, in other words, when the anode pressure is decreasing. On the other hand, the controller 7 carries out processing of Step S105 when the pressure increase flag is 1, in other words, when the anode pressure is increasing.

In Step S105, the controller 7 maintains the purge valve 54 in the closed state.

In Step S106, the controller 7 calculates an elapsed period *T1* since the pressure increase flag was set to 0. In other words, the elapsed period *T1* is an elapsed period since the decreasing in anode pressure started.

In Step S107, the controller 7 determines whether the elapsed period *T1* has become equal to or more than a first predetermined period or not. When the elapsed period *T1* becomes equal to or more than the first predetermined period, the controller 7 carries out processing of Step S108, and, otherwise, carries out processing of Step S105.

In Step S108, the controller 7 opens the purge valve 54, and resets the elapsed period *T1* to zero. The purge valve 54 is opened after the first predetermined period has elapsed since the decrease in anode pressure started, and this is because a predetermined time delay is generated until the anode off-gas flowing backward from the buffer tank reaches an upstream portion of the purge valve 54 since the decrease in anode pressure started.

In Step S109, the controller 7 calculates an elapsed period *T2* since the purge valve 54 was opened.

In Step S110, the controller 7 determines whether the pressure increase flag is set to 0 or not. The controller 7 carries out processing of Step S111 when the pressure increase flag is set to 0, and carries out processing of Step S113 when the pressure increase flag is set to 1.

In Step S111, the controller 7 determines whether the elapsed period *T2* has become equal to or more than the purge period or not. When the elapsed period *T2* is less than the purge period, the controller 7 finishes the processing for this time, and maintains the purge valve 54 in the open state. On the other hand, when the elapsed period *T2* is equal to or more than the purge period, the controller 7 carries out processing of Step S112.

In Step S 112, the controller 7 closes the purge valve 54, and resets the elapsed period *T2* and an elapsed period *T3* described later to zero.

In Step S 113, the controller 7 calculates the elapsed period *T3* since the pressure increase flag was set to 1. The elapsed period *T3* is calculated as a period during which the pressure increase flag is set to 1 while the purge valve 54 remains in the open state.

In Step S 114, the controller 7 determines whether the elapsed period *T3* has become equal to or more than a second predetermined period or not. When the elapsed period *T3* is less than the second predetermined period, the controller 7 carries out processing of Step S111, and, when the elapsed period *T3* is equal to or more than the second predetermined period, carries out processing of Step S115.

In Step S115, the controller 7 opens the purge valve 54, and resets the elapsed period *T2* and the elapsed period *T3* to zero. In the case where the pressure increase flag is set to 1 while the purge valve 54 remains in the open state in this way, when the second predetermined period has elapsed since the increase in anode pressure started, even when the period (elapsed period *T2*) during which the purge valve 54 remains in the open state is less than the purge period, the purge valve 54 is compulsorily closed.

When the increase in anode pressure starts, the anode gas is supplied from the high pressure tank 41 to the fuel cell stack 2, and thus, the anode off-gas relatively high in anode gas concentration flows from the fuel cell stack 2 toward the buffer tank 51 in an upstream portion of the purge valve 54. Therefore, before the anode off-gas high in anode gas concentration reaches the upstream portion of the purge valve 54, the purge valve 54 is closed to restrain the anode off-gas high in anode gas concentration from being discharged.

FIG. 19 is a flowchart illustrating the purge period calculation processing.

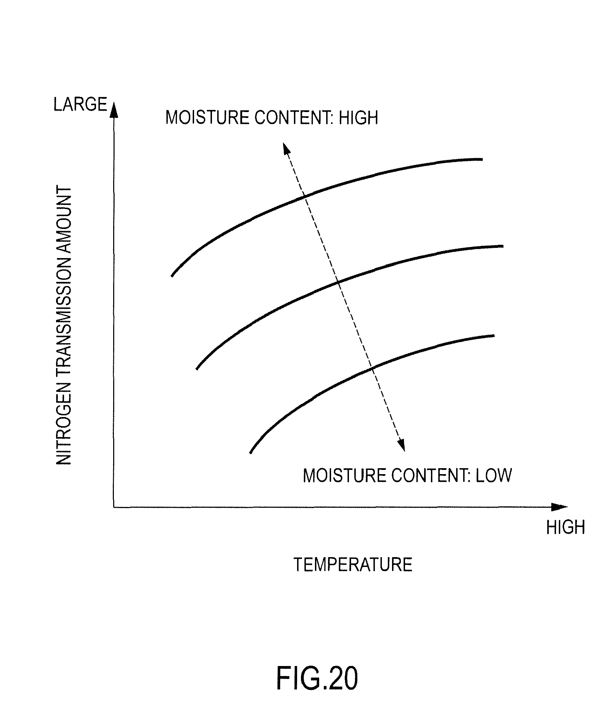

In Step S1021, the controller 7 refers to a map of FIG. 20 to calculate a nitrogen amount (hereinafter referred to as "nitrogen transmission amount") transmitted from the cathode side to the anode gas flow passages 121 based on the temperature and a moisture content of the electrolyte membrane 111. It should be noted that a coolant temperature is used as the temperature of the electrolyte membrane 111 in this embodiment. Moreover, the moisture content of the electrolyte membrane 111 is calculated based on an internal high frequency resistance (HFR) of the fuel cell stack 2 calculated by means of publicly known various methods (such as the AC impedance method).

In Step S1022, the controller 7 determines whether the purge valve 54 is opened or not. The controller 7 carries out processing of Step S1023 when the purge valve 54 is closed, and carries out processing of Step S1024 when the purge valve 54 is opened.

In Step S1023, the controller 7 calculates a nitrogen amount (hereinafter referred to as "total nitrogen amount") in the entire anode system. On this occasion, an amount calculated by adding the nitrogen transmission amount to a previous value of the total nitrogen amount is calculated as the total nitrogen amount.

In Step S1024, the controller 7 calculates the total nitrogen amount. On this occasion, an amount acquired by subtracting a purge flow rate per unit time calculated based on the anode pressure detected by the pressure sensor 44 from the amount acquired by adding the nitrogen transmission amount to the previous value of the total nitrogen amount is calculated as the total nitrogen amount. It should be noted that the purge flow rate is determined by a before/after pressure difference of the purge valve 54, namely the pressure acquired by subtracting the atmospheric pressure from the anode pressure and the opening degree of the purge valve 54. The opening degree of the purge valve 54 is constant in this embodiment, and when the anode pressure is known, the purge flow rate can be calculated.

In Step S1025, the controller 7 calculates a nitrogen concentration in the entire anode system based on the total nitrogen amount.

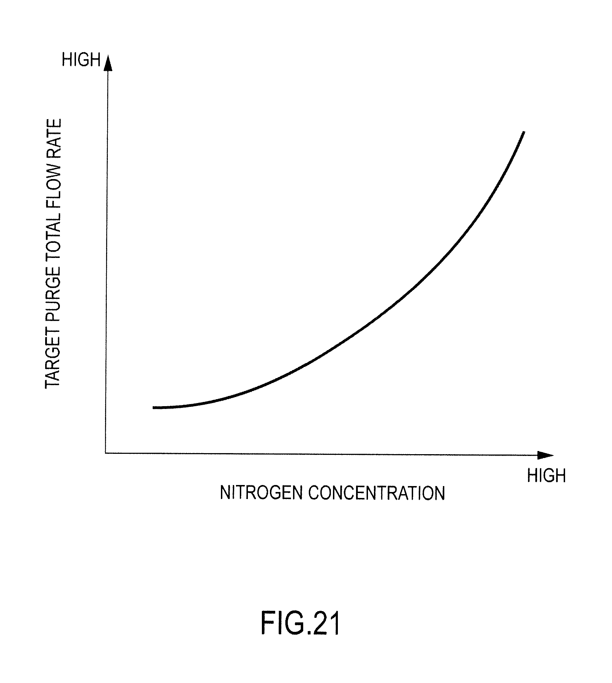

In Step S1026, the controller 7 refers to a table of FIG. 21, thereby calculating the target purge total flow rate based on the nitrogen concentration. As shown in FIG. 21, the target purge total flow rate increases as the nitrogen concentration increases.

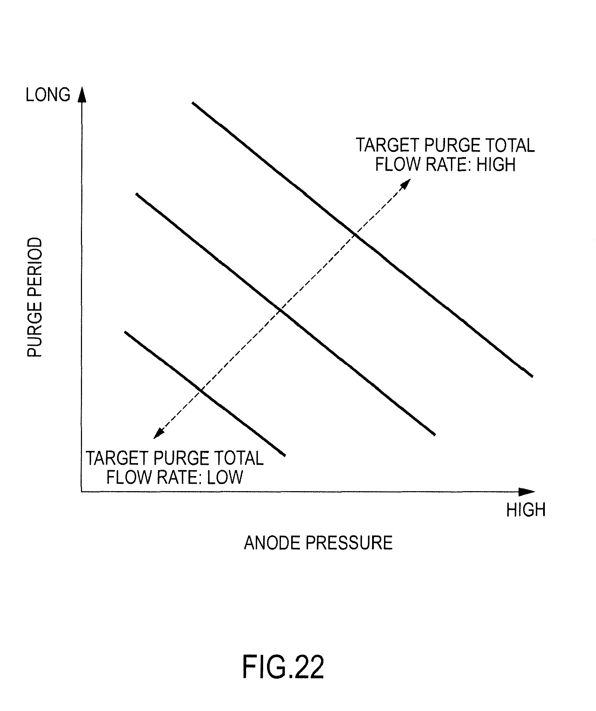

In Step S1027, the controller 7 refers to the map of FIG. 22, thereby calculating the purge period based on the anode pressure detected by the pressure sensor 44 and the target purge total flow rate. As shown in FIG. 22, when the anode pressure is the same, the purge period increases as the target purge total flow rate increases. Moreover, when the target purge total flow rate is the same, the purge period increases as the anode pressure decreases. This is because the purge flow rate per unit time is determined by the opening degree of the purge valve 54 and a pressure difference between the anode pressure and the atmospheric pressure, and the purge flow rate per unit time decreases as the anode pressure decreases.

According to this embodiment, the target purge total flow rate is increased as the nitrogen concentration in the anode system increases, thereby changing the purge period in the anode system depending on the nitrogen concentration so that the nitrogen concentration in the anode system is equal to or less than a predetermined concentration in this way.

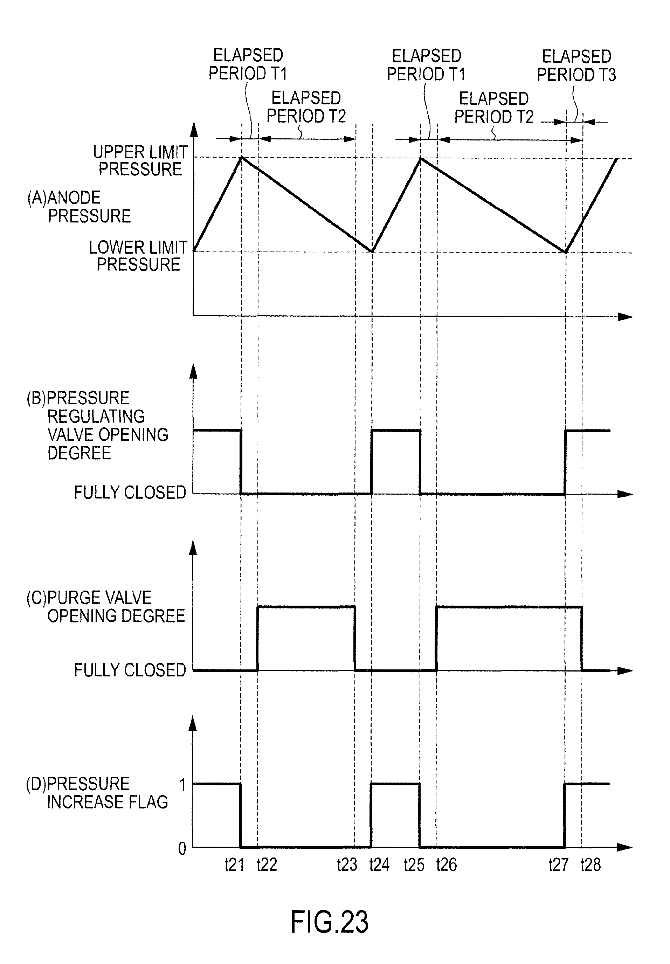

FIG. 23 is a time chart showing an operation of the purge control according to this embodiment. In the following description, the step numbers in the flowcharts of FIGS. 16 and 18 are also described in order to clarify a correspondence to the flowcharts.

When the anode pressure reaches the upper limit pressure at a time *t21* (part (A) of FIG. 23; No in S15), the pressure increase flag is set to 0 (part (D) of FIG. 23; S17), and the feedback control is applied to the opening degree of the pressure regulating valve 43 so that the anode pressure reaches the lower limit pressure (part (B) of FIG. 23; S18). Moreover, the calculation of the elapsed period *T1* is started (Yes in S104, and S106).

When the elapsed period *T1* becomes equal to or more than the first predetermined period at a time *t22*, the purge valve 54 is opened, and the anode off-gas accumulated in the buffer tank 51 is discharged to the outside (part (C) of FIG. 23; Yes in S107, and S108). Moreover, as a result of the opening of the purge valve 54, the calculation of the elapsed period *T2* starts (Yes in S103, and S109).

When the elapsed period *T2* becomes equal to or more than the purge period during the decrease in anode pressure at a time *t23*, the purge valve 54 is closed (part (C) of FIG. 23; Yes in S110, Yes in S111, and S 112).

The anode off-gas relatively low in anode gas concentration (high in nitrogen concentration) accumulated in the buffer tank 51 can be discharged to the outside by opening the purge valve 54 during the decrease in anode pressure in this way. Moreover, the anode off-gas relatively low in anode gas concentration flowing backward from the inside of the buffer tank can be discharged by opening the purge valve 54 when the first predetermined period has elapsed since the decrease in anode pressure started, without discharging the anode off-gas relatively high in anode gas concentration existing in the anode gas discharge passage 52 after the anode pressure has increased.

When the anode pressure reaches the lower limit pressure at a time *t24* (part (A) of FIG. 23; No in S19), the pressure increase flag is set to 1 (part (D) of FIG. 23; S20), and the feedback control is applied to the opening degree of the pressure regulating valve 43 so that the anode pressure reaches the upper limit pressure (part (B) of FIG. 23; S21).

When the anode pressure again reaches the upper limit pressure at a time *t25* (part (A) of FIG. 23; No in S15), the pressure increase flag is set to 0 (part (D) of FIG. 23; S17), and the feedback control is applied to the opening degree of the pressure regulating valve 43 so that the anode pressure reaches the lower limit pressure (part (B) of FIG. 23; S18). Moreover, the calculation of the elapsed period *T1* is started (Yes in S104, and S106).

When the elapsed period *T1* becomes equal to or more than the first predetermined period at a time *t26*, the purge valve 54 is opened (part (C) of FIG. 23; Yes in S107, and S108), and the calculation of the elapsed period *T2* starts (Yes in S103, and S109).

When the anode pressure decreases to the lower limit pressure during the decrease in anode pressure before the elapsed period *T2* reaches the purge period while the purge valve 54 remains in the open state at a time *t27*, (parts (A) and (C) of FIG. 23) the calculation of the elapsed period *T3* is started (No in S110, and S113).

Then, when the elapsed period *T3* becomes equal to or more than the second predetermined period at a time *t28* before the elapsed period *T2* reaches the purge period (Yes in S114), the purge valve 54 is closed (part (C) of FIG. 23; S115).

When the anode pressure decreases to the lower limit pressure while the purge valve 54 remains in the open state, and the increase in anode pressure starts in this way, the purge valve 54 is closed even before the elapsed period *T2* reaches the purge period.

As a result, until the anode off-gas relatively high in anode gas concentration flows from the fuel cell stack 2 through the anode gas discharge passage 52 toward the buffer tank 51 as a result of the increase in anode pressure, the anode off-gas low in anode gas concentration in the buffer tank 51 can be discharged. Then, the anode off-gas high in anode gas concentration flowing from the fuel cell stack 2 toward the buffer tank 51 can be restrained from being discharged.

According to this embodiment described above, in the fuel cell system 1 of the anode gas non-circulation type for carrying out the pulsation operation, the purge passage 53 provided with the purge valve 54 is connected to the anode gas discharge passage 52 connecting between the fuel cell stack 2 and the buffer tank 51, thereby opening the purge valve 54 during the decrease in anode pressure.

The anode off-gas relatively low in anode gas concentration (high in nitrogen concentration) temporarily accumulated in the buffer tank 51 flows backward from the buffer tank 51 side to the fuel cell stack 2 side during the decrease in anode pressure. Therefore, the anode off-gas high in nitrogen concentration can be discharged to the outside by opening the purge valve 54 during the decrease in anode pressure. As a result, the anode gas can be restrained from being wastefully discharged, and the nitrogen transmitted from the cathode side to the anode gas flow passages 121 can be efficiently discharged to the outside.

Moreover, when the anode off-gas low in anode gas concentration flows into the inside of the fuel cell stack 2 when the anode pressure decreases, the anode gas concentration decreases more at the downstream portions of the anode gas flow passages 121, resulting in a decrease in power generation efficiency, but the purge valve 54 opens when the anode pressure decreases, thereby restraining the decrease in power generation efficiency caused by the entrance of the anode off-gas low in anode gas concentration into the inside of the fuel cell stack 2.

Moreover, according to this embodiment, the purge valve 54 is opened after the first predetermined period has elapsed since the decrease in anode pressure started.

The anode off-gas relatively high in anode gas concentration exists in the anode gas discharge passage 52 as a result of the increase in anode pressure immediately after the decrease in anode pressure starts. Thus, the anode off-gas low in anode gas concentration flowing backward from the inside of the buffer tank 51 can be discharged without discharging the anode off-gas high in anode gas concentration by opening the purge valve 54 after the first predetermined period has elapsed since the decrease in anode pressure started.

Moreover, according to this embodiment, the purge period is calculated depending on the nitrogen concentration in the anode system so that the nitrogen concentration in the anode system is equal to or less than the predetermined concentration.

As a result, the nitrogen which has been transmitted from the cathode side to the anode gas flow passages 121 can be appropriately discharged to the outside, and the anode gas can be restrained from being wastefully discharged along with the anode off-gas.

Moreover, according to this embodiment, when the purge valve 54 is opened after the second predetermined period has elapsed since the increase in anode pressure started, the purge valve 54 is closed even when the elapsed period *T2* since the purge valve 54 was opened is less than the purge period.

As a result, until the anode off-gas relatively high in anode gas concentration flows from the fuel cell stack 2 through the anode gas discharge passage 52 toward the buffer tank 51 as a result of the increase in anode pressure, the anode off-gas low in anode gas concentration in the buffer tank 51 can be discharged. Then, the purge valve 54 is closed before the anode off-gas high in anode gas concentration flows from the fuel cell stack 2 toward the buffer tank 51, and the anode off-gas high in anode gas concentration can be restrained from being discharged.

Though a description has been given of the embodiments of this invention, the embodiments describe only a part of application examples of this invention, and are not intended to limit the technical scope of this invention to the specific configurations of the above-mentioned embodiments.

For example, according to the first embodiment, the first purge valve 49 and the second purge valve 50 are maintained to be opened during the activation purge processing, but the first purge valve 49 and the second purge valve 50 may be opened only during the pressure maintenance processing. As a result, the anode gas is restrained from being discharged to the cathode gas discharge passage 35 during the pressure reduction processing and the pressure increase processing, and only the mixed gas in the buffer tank 51 can be discharged to the cathode gas discharge passage 35.

Moreover, according to the second embodiment, if the purge valve 54 is still opened when the anode pressure is decreased to the lower limit pressure, in other words, when the anode pressure has decreased to the lower limit pressure before the elapsed period *T2* becomes equal to or more than the purge period, the lower limit pressure of the anode pressure may be temporarily decreased, and the increase in anode pressure may be started when the elapsed period *T2* becomes equal to or more than the purge period.

Moreover, a description is given of the fuel cell system including the two purge valves according to the first embodiment, and a description is given of the fuel system including the one purge valve according to the second embodiment, but the number of purge valves may be one or more in both the first and second embodiments.

This application claims priority from Japanese Patent Application No. 2012-54733, filed on March 12, 2012 in the Japan Patent Office, and Japanese Patent Application No. 2012-204177, filed on September 18, 2012 in the Japan Patent Office, the entire disclosure of which is incorporated herein by reference.

## Claims

1. A fuel cell system for supplying a fuel cell with an anode gas and a cathode gas, thereby generating electric power,
the fuel cell system comprising:
a control valve configured to control a pressure of the anode gas in the fuel cell;
a buffer part configured to accumulate an anode off-gas discharged from the fuel cell;
an off-gas discharge passage configured to connect the fuel cell and the buffer part with each other;
a purge passage connected to the off-gas discharge passage;
a purge valve provided on the purge passage;
a purge unit configured to open the purge valve to discharge the gas in the buffer part to an outside of the fuel cell system; and
a pressure control unit configured to decrease the pressure of the anode gas in the fuel cell from a first predetermined pressure to a second predetermined pressure, thereby controlling the gas in the buffer part to flow backward to the fuel cell side.

2. The fuel cell system according to claim 1, wherein the pressure control unit comprises:
a pressure increase unit configured to increase the pressure of the anode gas in the fuel cell to the first predetermined pressure;
a pressure reduction unit configured to decrease, after the pressure of the anode gas in the fuel cell is increased to the first predetermined pressure, the pressure of the anode gas to the second predetermined pressure less than the first predetermined pressure; and
a pressure maintenance unit configured to maintain, after the pressure of the anode gas in the fuel cell is decreased to the second predetermined pressure, the pressure of the anode gas in the fuel cell at the second predetermined pressure for a predetermined period.

3. The fuel cell system according to claim 2, wherein the pressure control unit operates the pressure increase unit again after operating the pressure maintenance unit, and repeats the operations of the pressure increase unit, the pressure reduction unit, and the pressure maintenance unit.

4. The fuel cell system according to claim 3, further comprising:
a purge continuation period calculation unit configured to calculate a necessary continuation period of the purge unit in accordance with a flow rate of the gas in the buffer part passing through the purge valve; and
a purge period calculation unit configured to calculate a period during which the pressure of the anode gas in the fuel cell is maintained at the second predetermined pressure as a purge period during which the gas in the buffer part is discharged to the outside of the fuel cell system,
wherein when the purge period becomes equal to or more than the necessary continuation period, the operations of the purge unit and the pressure control unit are finished.

5. The fuel cell system according to any one of claims 2 to 4, wherein the purge unit opens the purge valve when the pressure of the anode gas in the fuel cell is maintained at the second predetermined pressure.

6. The fuel cell system according to any one of claims 1 to 5, wherein the first predetermined pressure comprises a pressure capable of pushing a gas in an anode gas flow passage of the fuel cell and the gas in the off-gas discharge passage into the buffer part.

7. The fuel cell system according to any one of claims 1 to 6, wherein the second predetermined pressure comprises a pressure at which the gas in the buffer part flows backward at least further than a connection portion between the off-gas discharge passage and the purge passage toward the fuel cell side.

8. The fuel cell system according to claim 1, wherein the purge unit starts purge control of opening the purge valve to discharge the anode off-gas to the outside when the pressure of the anode gas decreases.

9. The fuel cell system according to claim 8, wherein the purge unit starts the purge control after a first predetermined period has elapsed since the decrease in pressure of the anode gas started.

10. The fuel cell system according to claim 8 or 9, wherein the purge unit calculates a purge period during which the purge valve is opened during the purge control in accordance with a nitrogen concentration in an anode system including the fuel cell and the buffer part.

11. The fuel cell system according to claim 10, wherein the purge unit finishes the purge control when an elapsed period from the start of the purge control becomes equal to or more than the purge period.

12. The fuel cell system according to claim 11, wherein the purge unit finishes the purge control in a case where the purge valve is opened after a second predetermined period has elapsed since the increase in pressure of the anode gas started even when the elapsed period since the start of the purge control is less than the purge period.

13. The fuel cell system according to claim 1, wherein the purge unit comprises:
a transmission nitrogen amount calculation unit configured to calculate, based on a temperature and a moisture content of an electrolyte membrane of the fuel cell, a transmission nitrogen amount transmitted through the electrolyte membrane from a cathode side to an anode side;
a nitrogen concentration calculation unit configured to calculate, based on the transmission nitrogen amount, a nitrogen concentration of an anode system including the fuel cell and the buffer part;
a target purge total flow rate calculation unit configured to calculate, based on the nitrogen concentration, a target value of a flow rate of the anode off-gas discharged during the purge control as a target purge total flow rate; and
a purge period calculation unit configured to calculate, based on the target purge total flow rate, a period during which the purge valve is opened during the purge control as a purge period.
